(19) Europäisches Patentamt
European Patent Office
Office européen des brevets

(11) EP 2 456 126 B1

(12) EUROPEAN PATENT SPECIFICATION

(45) Date of publication and mention of the grant of the patent:
**16.01.2013 Bulletin 2013/03**

(51) Int Cl.:
***H04L 12/26*** *(2006.01)*

(21) Application number: **10290621.1**

(22) Date of filing: **22.11.2010**

(54) **Method of measuring a packet loss rate**

Verfahren zum Messen einer Paketverlustrate

Procédé de mesure d'un taux de perte de paquets

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.05.2012 Bulletin 2012/21**

(73) Proprietor: **Alcatel Lucent**
**75007 Paris (FR)**

(72) Inventors:
- **Voith, Thomas**
**70806 Kornwestheim (DE)**
- **Stein, Manuel**
**70197 Stuttgart (DE)**
- **Oberle, Karsten**
**68199 Mannheim (DE)**

(74) Representative: **Wetzel, Emmanuelle**
**Alcatel Lucent**
**Intellectual Property & Standards**
**74430 Stuttgart (DE)**

(56) References cited:
**WO-A1-2007/024161**
**WO-A1-2010/072251**
**US-B1- 6 188 674**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 456 126 B1

## Description

The present invention relates to a method for measuring a packet loss rate in a packet-based communication network between a transmitting network entity and a receiving network entity of the communication network. The present invention relates to a corresponding transmitting network entity, a corresponding receiving network entity and a corresponding system for measuring a packet loss rate in a packet-based communication network.

The present invention is motivated by the fact that segmental (not necessarily end to end) non-intrusive (passive) packet loss rate measurements are not possible so far. For instance, in network virtualized environments, e.g. like Cloud infrastructures based on packet based network communication techniques, there is an increasing need to provide reliable information about the QoS (QoS = Quality of Service) available in these network virtualized environments. This information can be gathered by measuring packet loss rates. However, a measurement does always have a negative impact on the bandwidth provided by these packet based communication networks. In order to provide an optimal QoS this negative impact on the bandwidth during a measurement has to be as small as possible.

WO 2007/024161 A1 concerns measurement of data loss in a communication network wherein each node of the network is provided with a counter and is able to reset the counter on the other node. Transmitted packets in one node and received packets in the other node are counted during a pre-determined period of time and the counters after the pre-determined period of time has ended are compared in order to obtain a packet loss measurement. For the measurement of the data loss a test function is added. The test function comprises means for setting a testbit. The testbit is set in each transmitted packet in order to indicate to the terminating side (receiving node) that the packet has been counted on the originating side (transmitting node).

WO 2010/072251 A1 discloses a method for measuring data loss of a data flow in a communication network. At a transmitting node each data unit of the data flow is marked for dividing the data flow in blocks so that data units of a same block have a feature with a same value, while data units of contiguous blocks have the feature with different values. Further, at the transmitting node a first counter is increased when the feature has the first value, a second counter is increased when the feature has the second value and the data flow is transmitted to a receiving node. For each data unit at the receiving node the feature is checked, a third counter is increased when the feature has the first value, and a fourth counter is increased when the feature has the second value.

The data loss is calculated based on detected values of first, second, third and fourth counters.

It is the object of the present invention to provide an improved method, an improved transmitting network entity, an improved receiving network entity and an improved system for measuring a packet loss rate in a packet-based communication network.

The object of the present invention is achieved by a method for measuring a packet loss rate in a packet-based communication network between a transmitting network entity and a receiving network entity of the communication network, wherein the transmitting network entity assigns a series of $M \geq N \geq 2$ time periods TS[j] with j=0 to M-1 to N communication pipes Pi with i=0 to N-1, the communication pipe Pi is assigned to the time period TS[j] with i being congruent to j modulo N, and using the communication pipe Pi during its correspondingly assigned time period TS[j] for transmitting the data packets within the time period TS[j], the data packets being directed to the receiving network entity, the transmitting network entity counts the number of the directed data packets TX-Ci for each time period TS[j], the transmitting network entity transmits the directed data packets via the assigned communication pipe Pi to the receiving network entity, the receiving network entity receives data packets transmitted via the communication pipes Pi with i=0 to N-1 during time periods TR[j] associated with the respective time period TS[j] with j=0 to M-1, the receiving network entity counts the number of the received data packets RX-Ci for each time period TS[j], and the packet loss rate is measured by a calculation based on the number of directed data packets TX-Ci and the number of received data packets RX-Ci. The object of the present invention is also achieved by a transmitting network entity for measuring a packet loss rate in a packet-based communication network between the transmitting network entity and a receiving network entity of the communication network, wherein the transmitting network entity comprises a control unit adapted to assign a series of $M \geq N \geq 2$ time periods TS[j] with j=0 to M-1 to N communication pipes Pi with i=0 to N-1, the communication pipe Pi being assigned to the time period TS[j] with i being congruent to j modulo N, and use the communication pipe Pi during its correspondingly assigned time period TS[j] for transmitting the data packets within the time period TS[j], the data packets being directed to the receiving network entity, to count the number of the directed data packets TX-Ci for each time period TS[j], to transmit the directed data packets via the assigned communication pipe Pi to the to the receiving network entity, and to provide the number of the directed data packets TX-Ci to an analyzing network entity for measuring the packet loss rate by a calculation based on the number of directed data packets TX-Ci. The object of the present invention is further achieved by receiving network entity for measuring a packet loss rate in a packet-based communication network between a transmitting network entity and the receiving network entity of the communication network, wherein the receiving network entity comprises a control unit adapted to receive data packets transmitted from the transmitting network entity via $N > 0$ communication pipes Pi with i=0 to N-1 during a series of $M \geq N \geq 2$ time periods TS[j] with j=0 to M-1, the communication pipe Pi being assigned to the time period TS[j] with i being congruent to j modulo N, and use the communication pipe Pi during a correspondingly assigned time period TR[j] for receiving the data packets within the time period TR[j], to count the number of the received data packets RX-Ci for each time period TR[j], and to provide the number of the received data packets RX-Ci to an analyzing network entity for measuring the packet loss rate by a calculation based on the number of received data packets RX-Ci. The object of the present invention is achieved by a system for measuring a packet loss rate in a packet-based communication network, wherein the system comprises a transmitting network entity, a receiving network entity and an analyzing network entity, wherein the transmitting network entity comprises a control unit adapted to assign a series of M ≥ N ≥ 2 time periods TS[j] with j=0 to M-1 to N communication pipes Pi with i=0 to N-1, the communication pipe Pi being assigned to the time period TS[j] with i being congruent to j modulo N, and using the communication pipe Pi during its correspondingly assigned time period TS[j] for transmitting the data packets within the time period TS[j], the data packets being directed to the receiving network entity, to count the number of the directed data packets TX-Ci for each time period TS[j], and to transmit the directed data packets via the assigned communication pipe Pi to the to the receiving network entity, wherein the receiving network entity comprises a control unit adapted to receive data packets transmitted via the communication pipes Pi with i=0 to N-1 during time periods TR[j] associated with the respective time periods TS[j] with j=0 to M-1, to count the number of the received data packets RX-Ci for each time period TR[j], and wherein the analyzing network entity comprises a control unit adapted to measure the packet loss rate by a calculation based on the number of directed data packets TX-Ci and the number of received data packets RX-Ci.

It is possible that the communication network is a virtual or a physical communication network. The transmitting network entity can be a virtual or a physical network entity. The receiving network entity can be a virtual or a physical network entity. It is also possible that the N communication pipes Pi are virtual or a physical communication pipes. "Virtual" means that entities like the communication network, the transmitting network entity, the receiving network entity, the communication pipes and/or network entities are software means or modules. "Physical" means that entities like the communication network, the transmitting network entity, the receiving network entity, the communication pipes and/or network entities are hardware means or devices.

The present invention provides a surprisingly different and also simple approach - known form the prior art - to measure preferably aggregated or total packet loss rates of packet flows along the total or even a section of the communication path in a packet based communication network. The packet based communication network can be a virtual, like a VPN (VPN = virtual private network) or any other kind of overlay network, an IP based communication network (IP = Internet Protocol), a packet based access network and/or a core network.

Since network virtualized environments make use of encapsulation or separation and isolation of packet streams, embodiments according to the present invention allow for passive loss rate measurements. For example, virtualization of networking is one key element in cloud infrastructures, especially for Infrastructure as a Service (laaS = Infrastructure as a Service) solutions besides the virtualization of computing and storage resources. Embodiments according to the present invention can provide passive measurements of the packet loss rate of the entire IP traffic.

One problem is, that for instance laaS platforms do not have the traffic endpoints in its hand as those solutions are not covering end-to-end but only edge-to-edge connectivity, which makes existing passive methods watching the endpoint impossible. However to guarantee required QoS for a lot of deployed services on the same physical infrastructure as offered by an laaS provider, it is required also to measure segmentally inside the provider domain and also aggregated IP flows. This problem is solved by the present invention.

Moreover, embodiments according to the present invention may not need any heuristic predictions or projections. Also it may not need any intrusive (active) measurements adding test traffic. In virtualized networking environments as usually used in networking cloud solutions or VPNs encapsulation techniques e.g. tunnels are used. For instance, in case of GRE tunnels the GRE identifier with a size of 32bit can be used for realizing separation of traffic using the same network path using the same tunnel end points IP addresses (GRE = Generic Routing Encapsulation protocol). However, embodiments according to the present invention can also be applied to unencapsulated traffic. In case of measuring packet loss rates of unencapsulated IP traffic some reserved bits of an IP header or an option of it may be required.

Embodiments of the present invention provide to measure with a very low impact on the to be measured flow/streams/aggregated traffic the loss rate as said before, It is possible to perform this measurement of the packet loss rate segmentally covering always directly the real loss rate, wherein no projection or estimation may be needed or required. Thereby, embodiments of the present invention provide a new approach for obtaining the real packet loss rate.

Before describing presently preferred embodiments of the present invention notation and wording used is introduced as follows:

For each time period TS[j] with j=0 to M-1 assigned by the transmitting network entity there is an associated time TS0(j) which indicates the beginning of the respective time period TS[j].

In the following the interval syntax [a, b[ will be used, wherein a is in the interval [a, b[, but b is not in the interval [a, b[.

The time period TS[j] can be given by

$$TS[j] = [TS0(j), TS0(j+1)[, \quad j=0 \text{ to } M\text{-}1.$$

For each time period TR[j] with j=0 to M-1 assigned by the receiving network entity there is an associated time TR0(j) which indicates the beginning of the respective time period TR[j]. The time period TR[j] can be given by

$$TR[j] = [TR0(j), TR0(j) + TR(j) [, \quad j=0 \text{ to } M\text{-}1.$$

A distance delay time DDT is a time period which is related to minimum time required by a data packet for traveling from the transmitting network entity to the receiving network entity via the communication network. MDT is the maximum delay time experienced by a data packet for travelling from the transmitting network entity to the receiving network entity via the communication network. $\Delta$ C denotes the clock deviation between the transmitting network entity and the receiving network entity. The clock deviation $\Delta$C may be given by the difference of a reference time Tref at the transmitting network entity and a reference time T'ref at the receiving network entity.

It is possible that the time periods TS[j] and/or TR[j] are referred to as time period durations TS(j) and/or TR(j) respectively. For instance, TS(j) and TR(j) denote the length of the time period TS[j] and TR[j], respectively, Furthermore, constant time periods and/or constant time period lengths are independent of the argument denoted without the argument, e.g. a constant time period TS(j) can be denoted as TS, a constant time period length TR(j) can be denoted as TR.

Further advantages are achieved by embodiments of the invention indicated by the dependent claims.

According to a preferred embodiment of the invention the transmitting network entity sets the beginning time TS0(j) of the time period TS[j]. TS[j] can be given by

$$TS[j] = [TS0(j), TS0(j) + TS(j)[ = [TS0(j), TS0(j+1)[ \quad , j=0 \text{ to } M\text{-}1$$

wherein TS(j) is a transmitting time interval length given by TS(j) = TS0(j+1)-TS0(j). Preferably, the transmitting time interval length is constant TS(j) = TS with the interval

$$TS[j] = [TS0(j), TS0(j) + TS[ \quad ,j=0 \text{ to } M\text{-}1,$$

According to a preferred embodiment of the invention the transmitting network entity sets the beginning time TS0(j) of the time period TS[j] to the sum of a reference time Tref at the sending network entity and the respective time period TS[j]. In case of time periods TS[j] of constant length TS the beginning time TS0[j] can be given by

$$TS0(j) = Tref + j * TS, \quad j=0 \text{ to } M\text{-}1,$$

wherein '*' denotes the multiplication.

According to a preferred embodiment of the invention the receiving network entity sets the beginning time TR0 (j) of the time period TR[j] to the sum of a reference time T'ref at the receiving network entity, the respective beginning time period TS0(j) and a, preferably minimum, distance delay time DDT.

Preferably, TR[j] shifted by an offset in time covering the distance delay time and possible clock deviations between RX and TX system.

The respective beginning time TS0(j) is a transmitting side beginning time of the time period TS[j]. Preferably, the distance delay time DDT is constant and/or the time period length TS of the time periods TS[j] are constant.

Furthermore, it is possible, that the beginning time of TR0(j) time period TR[j] can be corrected by the clock deviation $\Delta$C between transmitting and receiving network entity. Preferably, the beginning time TR0(j) is given by

$$TR0(j) = TS0(j) + DDT - \Delta C, \qquad j=0 \text{ to } M-1,$$

For preferred time periods TS[j] of constant length TS the beginning time TR0(j) are given by

$$TR0(j) = T'ref + j*TS + DDT - \Delta C, \qquad j=0 \text{ to } M-1.$$

It is possible that the clock deviation ΔC is omitted if the clock deviation ΔC equals zero or is negligible small. Negligible small means that the clock deviation ΔC may be at least 10 times smaller than the difference between maximum delay time MDT and distance delay time DDT.

The time periods TS[j] with j=0 to M-1 may define a grid or raster in time by means of the respective times TS0 (j) and may be called transmitting time slits or windows. The time periods TR[j] with j=0 to M-1 may also define a grid or raster in time by means of the respective times TR0(j), which may be called receiving time slits or windows. The series of time periods TS[j] and/or TR[j] with j=0 to M-1 can be related to N, e.g. by M=N or M >> N. The raster may define a relation between the communication pipes Pi and the index j by means i being congruent to j modulo N.

The receiving time window TR[j] may be larger than the respective transmitting time window TS[j]. Thereby, it is possible to cover variation and/or disordered data packets, and/or deviations of system clocks of the transmitting network entity and the receiving network entity. NTP (NTP = Network Time Protocol) synchronized system usually may deviate around 100 milliseconds. The delay variation of data packets depends on the distance and used transmission technology. Therefore, preferably time periods of 1 second and more are applicable for this mechanism. Smaller intervals may be possible in more accurate systems.

Preferably, the maximal duration of time periods TR(j) at the receiving network entity depend on the number N of communication pipes Pi. The maximal duration TR(j) of the time periods TR[j] may be given by

$$TR(j) = TR0(j+N) - TR0(j) - \Delta E.$$

Preferably, for time periods TS[j] of constant length TS the maximal duration of the time periods TR are given by

$$TS < TR \leq N*TS - \Delta E.$$

Δ E may be an additional delay time period or ΔE may be an additional time period foreseen as a safety gap between measurements on the same pipe for not receiving any packets preferably.

The corresponding time periods TR[j] are given by

$$TR[j] = [\ TR0(j), TR0(j) + TR(j)\ [\ = [\ TR0(j), TR0(j+N) - \Delta E\ [, \ j=0 \text{ to } M-1.$$

For time periods TR[j] of constant length TR, the time periods TR[j] may be given by

$$TR[j] = [TR0(j), TR0(j) + TR\ [, \qquad j=0 \text{ to } M-1.$$

It is possible, that the receiving network entity sets the time period duration TR(j) to a value bigger than the sum of respective time period lengths TS(j), the clock deviation ΔC, the maximum delay time MDT minus the distance delay time DDT covering the maximum possible delay variations between sending and receiving network entity and lower than next receiving period TR0(j + N) for the same communication pipes Pi with i being congruent to j modulo N.

The time periods TR[j] at the receiving side can be chosen such that they fulfill the following relations with respect to their lengths TR(j):

$$TS(j) + \Delta C + MDT - DDT \leq TR(j) \leq TR0(j + N) - TR0(j) - \Delta E.$$

Preferably, for constant time periods TS of constant length TS:

$$TS + \Delta C + MDT - DDT \leq TR \leq N*TS - \Delta E$$

It is possible, that the maximum delay time MDT or distance delay time DDT is determined by a certain quantile of measured delays between transmitting and receiving network entity.

It is possible, that the receiving network entity sets the time period duration TR(j) bigger to the sum of the respective time period duration TS(j), clock deviation ΔC and a factor f, which is preferably greater equal 1, i.e. f ≥ 1, of the difference of the maximum delay time MDT and distance delay time DDT and small than the length of the next receiving time period beginning at TR0(j + N) for the same communication pipe Pi with i being congruent to j modulo N., i.e.

$$TS(j) + \Delta C + f * (MDT - DDT) \leq TR(j) \leq TR0(j + N) - TR0(j) - \Delta E,$$

with f ≥ 1 and j=0 to M-1, Preferably, for time periods TS[j] of constant length TS and f ≥ 1 it is

$$TS + \Delta C + f * (MDT - DDT) \leq TR \leq N*TS - \Delta E.$$

Furthermore, for the factor f being grater equal 2, it is possible to ensure that the, preferably all, measured data packets, i.e. received data packets, are correlated correctly with the related transmitting period.

It is possible that the clock deviation ΔC is omitted if the maximum clock deviation ΔC is negligible small compared to the difference of the maximum delay time MDT and distance delay time DDT and the factor f is greater than 1, i.e. f > 1. Negligible small means that the maximum clock deviation ΔC may be at least 10 times smaller than the difference between maximum delay time MDT and distance delay time DDT.

Preferably, the time period duration TS(j) is at least 0.5 seconds. The time period duration TS(j) can be smaller than 1 min. The distance delay time DDT can be in regions of milliseconds for short distance measurements or range from 500 to 700 milliseconds for satellite connections and more depending on the location of transmitting and receiving network entities and a used transport network in the middle. The difference of the maximum delay time MDT and distance delay time DDT grows with the distance between transmitting and receiving network entity on for instance in a routed IP network. Additional network elements and/or functions between transmitting and receiving entity, e.g. measurement segment endpoints, may also cause additional delay. Other transport technologies for instance SDH (SDH = Synchronous Digital Hierarchy) are more insensible regarding the delay variation over distance.

Preferably, the transmitting network entity cyclically assigns the data packets to N > 0 communication pipes Pi with i=0 to N-1 in time periods TS[j] with j=0 to M-1. It is possible that measuring the packet loss rate is continuous.

It is possible that the measurement time range just covers a subrange or subset of j within j=0 to M-1, whereby this may be the usual case for transmitting and receiving network entities agreeing on a Tref, T'ref an a system base and not on a per measurement base. Therefore it is possible that Tref, T'ref is a commonly agreed absolute time reference which could for instance the UTC time (UTC = Universal Time Coordinated) of TS0(j=s) meaning the beginning time of a dedicated loss rate measurement or a system reference time for instance the Unix time, preferably seconds since 1.1.9970. It may be possible that the Tref respective T'ref relates to a time before the loss rate measurement takes place, wherein the measurement starts with a j > 0.

It is also possible that the assignment of the data packets to N > 0 communication pipes Pi with i=0 to N in time periods TS[j] with j=0 to M-1 is such that time periods of no operation are inserted in the series of time periods TS[j] with j=0 to M-1 between two neighbored periods TS[j] and TS[j+1].

According to a preferred embodiment of the invention the transmitting network entity initializes the measurement of the packet loss rate by sending a timestamp to the receiving network entity. The receiving network entity determines a distance delay time DDT associated with the communication distance between the transmitting network entity and the receiving network entity.

According to a preferred embodiment of the invention the transmitting network entity initializes the measurement of the packet loss rate by sending a timestamp of TS0(j) and/or Tref information like index j to the receiving network entity.

Preferably, the receiving network entity determines a minimum distance delay time DDT by determination of a certain quantile based on one way delay measurements between the transmitting network entity and the receiving network entity or by estimation due to knowledge on the transport technology associated with the network path beforehand.

According to a preferred embodiment of the invention the transmitting network entity sends a timestamp, preferably the time stamp being TS0(j) and/or index j, at the beginning of the first time period TS[0] or at the beginning of time periods TS[j] with j=0 to M-1. Therefore, the beginning of the first time period TS[0] is at the time TSO(0) of the measurement and/or the beginning of the time periods TS[j] with j = 0 to M-1 are at the respective times TS0(j) during the measurement.

It is possible to send, by the transmitting network entity, additional packets with timestamps, preferably TS0(j) and/or index j, and/or other information regarding the measurement, like N or TS(j), for performing the method for measuring the packet loss rate in unsynchronized communication networks for adjusting TR0(j) on receiving side.

According to a preferred embodiment of the invention, for measuring the packet loss rate by calculation, the transmitting network entity provides the number of directed data packets TX-Ci of respective time periods TS[j] to an analyzing network entity. The receiving network entity provides the number of received data packets RX-Ci of respective time periods TR[j] to the analyzing network entity. The analyzing network entity calculates the packet loss rate by subtracting the number of directed data packets TX-Ci from the number of received data packets RX-Ci and divides the result of the subtraction by the number of directed data packets TX-Ci or by the length of respective time period TS[j].

According to a preferred embodiment of the invention the analyzing network entity is provided by the transmitting network entity, the receiving network entity or a further network entity which preferably is a network management entity of the communication network.

Preferably, the transmitting network entity and/or the receiving network entity provide the number of directed data packets TX-Ci and/or the number of received data packets RX-Ci, respectively with an absolute time interval information, preferably the beginning of respective time interval TS0(j) and/or index j, associated with the series of time periods TS[j] with j=0 to M-1 to an analyzing network entity.

According to a preferred embodiment of the invention, the measured packet loss rates are stored for enabling a performance analysis of the communication network, preferably by a network entity. Preferably the network entity is a network management entity of the communication network, the transmitting network entity and/or the receiving network entity. The measured packet loss rates can be stored by means of a data base, an analyzing network and/or an analyzing system. The data base can be provided by an analyzing network and/or an analyzing system.

It is possible that an analyzing network and/or an analyzing system is provided with measured packet loss rates, preferably with further data, directly or by means of a data base. The further data may comprise information about synchronization information associated with the transmitting network entity and the receiving network entity, time data, preferably TS0(j) and/or index j, associated with the time periods TS[j] and/or the time periods TR[j] with j=0 to M-1, a delay time TD, and/or a distance delay time DDT. The analyzing network and/or an analyzing system can correlate the measured packet loss rates data, preferably with further data, from transmitting network entity and/or the receiving network entity for the time periods TS[j] and/or the time periods TR[j] with j=0 to M-1 and calculate the loss rate per time period TS[j] for concatenation of several time intervals, preferably by using the further data.

Preferably, the time periods TS[j] and/or the time periods TR[j] with j=0 to M-1 are regenerated such that it is a rational relation between a packet delay variation, which is the difference of the maximum delay time MDT and the distance delay time DDT, and a measurement periodicity TS[j] or TS of the transmitting time periods. For unsynchronized systems it is possible to adjust or move the regeneration of the time periods TS[j] and/or the time periods TR[j] with j=0 to M-1, i.e. to adapt the transmitter and/or receiver time raster, respectively, depending on received timestamps, preferably TS0(j) and/or the index j, and/or an analysis of the received data packets distribution in relation to the communication pipes Pi, The data required for the regeneration of the time periods TS[j] and/or the time periods TR[j] with j=0 to M-1 and/or the index j may be stored, preferably in a data base, as the further data to be used by the analyzing network and/or an analyzing system.

According to a preferred embodiment of the invention the N communication pipes Pi with i=0 to N-1 are communication tunnels or channels comprising two or more packet flows. Thereby, packet multiplex methods can also be used for assigning the series of time periods TS[j] with j=0 to M-1 to the N communication pipes Pi with i=0 to N-1.

According to a preferred embodiment of the invention the transmitting network entity inserts a packet marker in the packet headers of the directed data packets associated with the respective communication pipe Pi for using the communication pipe Pi during its correspondingly assigned time period TS[j]. The receiving network entity assigns the received data packets to the respective time period TR[j] in accordance with the packet marker of the received data packets. The packet marker can be a communication pipe identifier. Preferably, the packet marker is associated with a GRE (GRE = generic routing encapsulation protocol) key, wherein at least 2 keys are required, since $N \geq 2$. The GRE key has a size of 32 Bits. The GRE key comprises a number which was inserted by the encapsulator providing the packet marker. The GRE key can be used for identifying an individual traffic flow within a tunnel, i.e. a communication pipe Pi. It is possible to switch between IP addresses by IP aliasing. Another option is to base the assignment of the communication pipes on SCTP (SCTP = Stream Control Transmission Protocol) by switching between streams.

Preferably, in case of IP data packets, the packet marker can be inserted by means of using the option header. The IHL (IHL= IP Header Length) has a size of 4 Bit, wherein the total length of the IP header is a multiple of 32 Bit. For instance, in case that the IHL is 5, then there are 160 Bit available, which is also the minimal length of the IP header data array.

It is also possible to use for packet marking the TOS Byte (TOS = Type of Service) in case that the DSCP code points (DSCP = Differentiated Services Code Point) are not completely used. TOS Byte has a size of 8 Bit. This array may be used for prioritizing of IP data packets and QoS. The TOS Bits can be used according to RFC 791 (RFC = Requests for Comments), RFC 2474 or RFC 3168. According to RFC 791 the TOS Bits are used as follows: Bits 0-2 for Precedence, Bit 3 for Delay Normal/Low, Bit 4 for Throughput Normal/High, Bit 5 for Reliability Normal/High and Bits 6-7 are reserved for Future Use. According to RFC 2474 the TOS Bits are used as follows: Bits 0-5 for DSCP and Bits 6-7 for CU (CU = Currently Unused). According to RFC 3168 the TOS Bits are used as follows: Bits 0-5 for DSCP and Bits 6-7 for ECN (ECN = Explicit Congestion Notification - IP- flow control)

According to a preferred embodiment of the invention the transmitting network entity resets the number of directed data packets TX-Ci to 0 at the beginning of the time periods TS[j] with j=0 to M-1. The receiving network entity resets the number of received data packets RX-Ci to 0 at the beginning of the time periods TR[j] with j=0 to M-1. The beginning of the time periods TS[j] with j=0 to M-1 may be denoted by TS0(j). The beginning of the time periods TR[j] with j=0 to M-1 may be denoted by TR0(j).

According to a preferred embodiment of the invention the N communication pipes Pi are different physical channels or channels provided according to a time, frequency and/or code multiplex method, and/or a marking method.

According to a preferred embodiment of the invention the transmitting network entity is at a starting point of a communication path of the transmitted data packets or at a point within the communication path of the transmitted data packets. The receiving network entity is at an end point of a communication path of the transmitted data packets or at a point within the communication path of the received data packets.

Preferably, network entities, like the transmitting network entity, the receiving network entity are selected from the group of routers, switches, proxies, gateways, access points, network interfaces and/or software modules. The network entities can be hardware devices and/or software modules.

These features as well as further features and advantages of the invention will be better appreciated by reading the following detailed description of presently preferred exemplary embodiments taken with the accompanying drawings of:

Figure 1a shows a schematic sketch of a packet-based communication network C comprising a transmitting network entity TX, a receiving network entity RX and an analyzing network entity A in accordance with the present invention.

Figure 1b shows an example of a network entity N able to act as transmitting network entity TX, receiving network entity RX and/or analyzing network entity A.

Figure 2 shows an embodiment of the present invention with N=2 using switching between communication pipes P0 and P1 using tunnel interfaces, e.g. GRE tunnels having the same network path due to same tunnel endpoint IP addresses.

Figure 3 shows an embodiment of the present invention with N=2 using packet markers for defining the communication pipes P0 and P1.

Figure 4 shows schematic traveltime-distance-curve and the receiving windows, i.e. time periods TR[j], for N=2.

Figure 5 shows schematic traveltime-distance-curve and the receiving windows, i.e. time periods TR[j], for N=3.

Figure 6a shows schematic traveltime-distance-curve and the receiving windows, i.e. time periods TR[j] using timestamps in an unsynchronized system, for N=2.

Figure 6b shows schematic traveltime-distance-curve and the receiving windows, i.e. time periods TR[j] in a synchronized system, for N=2.

Figure 6c shows schematic traveltime-distance-curve and the receiving windows, i.e. time periods TR[j] in a self adjusting receiving clock raster system, for N=3.

Figure 1a shows a schematic sketch of a packet-based communication network C comprising a transmitting network entity TX, a receiving network entity RX and an analyzing network entity A in accordance with the present invention. Figure 1a shows thereby a sketch of preferred embodiments of the present invention. The communication network is IP packet based communication network. The communication path of the data packets starting at starting points S, S' and/or S" and directed to the end points E and/or E' are indicated by the arrow starting at the starting point S, S' and/or S", respectively which ends at the transmitting network entity TX, the arrows starting at the starting point the transmitting network entity TX which end at the receiving network entity RX and which are assigned to communication pipes P1, P2, P3, P4, P5, and the arrows starting at receiving network entity RX ending at the end points E and/or E'. It is possible that the communication path has one or more starting points and one or more end points.

The method for a packet loss rate in a packet-based communication network between a transmitting network entity TX and a receiving network entity RX of the communication network C is as follows:

The transmitting network entity TX assigns a series of $M \geq N \geq 2$ time periods TS[j] with j=0 to M-1 to N communication pipes Pi with i=0 to N-1. Each communication pipe Pi is assigned to a respective time period TS[j] of the series of $M \geq N \geq 2$ time periods TS[j] with j=0 to M-1, wherein i is congruent to j modulo N. The communication pipe Pi is used during its correspondingly assigned time period TS[j] for transmitting the data packets within the time period TS[j]. The data packets are directed to the receiving network entity RX. The transmitting network entity TX counts the number of the directed data packets TX-Ci for each time period TS[j] and transmits the directed data packets via the assigned communication pipe Pi to the receiving network entity RX. Preferably, the directed data packets are assigned to the N communication pipe Pi with i=0 to N-1 by means of different physical channels or channels provided according to a time, frequency and/or code multiplex method, and or a marking method. The receiving network entity RX receives data packets transmitted via the communication pipes Pi with i=0 to N-1 during time periods TR[j] associated with the respective time periods TS[j] with j=0 to M-1. In order to take into account the taveltime difference of the data packets, the receiving network entity RX sets the beginning TR0(j) of time period TS[j] to the sum of the respective time period TS0(j) and a distance delay time DDT corrected by the clock deviation $\Delta C$, which is expressed by the following relations

$$TR0(j) = TS0(j) + DDT - \Delta C, \qquad \text{with } j=0 \text{ to } M-1,$$

$$TR0(j) = T'ref + j*TS + DDT - \Delta C, \qquad \text{with } j=0 \text{ to } M-1$$

and
for constant TS period,
wherein the length of time period TR(j) is bound by

$$TS(j) \leq TR(j) \leq TS(j + N), \quad \text{with } j=0 \text{ to } M-1,$$

$$TS <= TR <= N*TS, \qquad \text{with } j=0 \text{ to } M-1$$

and
for constant period lengths TS and
TR.

Furthermore, for unsynchronized systems the initialization of the measurement of the packet loss rate, the transmitting network entity TX sends a timestamp TS0(j) to the receiving network entity RX. TS0(j) is the beginning time of the respective time period TS[j], j=0 to M-1. It is also possible that the clock or system clock of the transmitting network entity TX and/or the receiving network entity RX are synchronized by means of the NTP. The receiving network entity RX determines the receiving time periods taken the distance delay time DDT associated with the communication distance between the transmitting network entity TX and the receiving network entity RX and the maximum possible clock deviation into account. Preferably, the traveltime delay variation MDT - DDT of the data packets is related to the communication distance between the transmitting network entity TX and the receiving network entity RX and used transport technology. The receiving time periods has to be long enough to catch all transmitted data packets of the related sending period. The receiving network entity RX counts the number of the received data packets RX-Ci for each time period TS[j] and received via the communication pipe Pi.

The packet loss rate is then measured by calculation based on the number of directed data packets TX-Ci and the number of received data packets RX-Ci as follows: The transmitting network entity TX provides by sending the number of directed data packets TX-Ci of respective time periods TS[j] to the analyzing network entity A. The receiving network entity RX provides by sending the number of received data packets RX-Ci of respective time periods TR[j] to the analyzing network entity A. The analyzing network entity A calculates the packet loss rate by subtracting the number of directed data packets TX-Ci from the number of received data packets RX-Ci and dividing the result of the subtraction the number of directed data packets TX-Ci. The provision of the number of directed data packets TX-Ci and the number of received data packets RX-Ci to the analyzing network entity A by the transmitting network entity TX and the receiving network entity RX, respectively is indicated in the figure 1 by the arrows ending at the analyzing network entity A.

Furthermore, it is possible that the transmitting network entity TX resets the number of directed data packets TX-Ci to 0 at the beginning of the time periods TS[j] with j=0 to M-1. The receiving network entity RX can reset the number of received data packets RX-Ci to 0 at the beginning of the time periods at TR0(j) with j=0 to M-1. However, the resetting of the number of directed data packets TX-Ci and the number of received data packets RX-Ci to 0 is optional because it does not change the information provided by the measurement.

For further analysis or performance analysis of the communication network, the network management entity A may store, preferably in a data base, the transmitted and received packets and/or the measured packet loss rates together transmitting time information related to TS[j]. This could be the beginning of transmitting period timestamp of TS0(j) and/or the receiving period TR[j] and/or the index j or any other reference, which deals as a reference for identifying the related time period.

An example of a network entity N able to act as transmitting network entity TX, receiving network entity RX and/or analyzing network entity - as shown in Figure 1a - is shown in Figure 1b. The network entity N comprises control unit NC, a memory or a database NS for storage of data associated with the measurement of packet loss rate, and a network interface NI. The network interface NI provides communication means for communicating via the packet based communication network as well as a TCP/IP stack (TCP = Transmission Control Protocol).

The basis of the present invention is additionally described with slightly other wording, i.e. by further embodiments, for a better understanding of the invention as follows:

The basic idea is to switch the traffic, i.e. data packets, between N=2 or more virtual links/sections or mark the traffic with N=2 or more packet markers in preferably equidistant time sending windows, i.e. the time periods TS[j] with j=0 to M-1 starting or beginning at TS0(j). So that on the receiving side, i.e. the receiving network entity, data packets of the entire traffic can be measured in relation to the sending windows TS[j] with j=0 to M-1. The receiving counting window size TR(j) with j=0 to M-1 is preferably bigger than the sending one to capture also delayed data packets and also to compensate for clock inaccuracy.

The N=2 or more sending windows reiterates TS[j] with j=0 to M-1 preferably continuously, which is treated like a modulo iteration. The modulo iteration can be taken as a time raster used for sending window determinations on the receiving side, which may avoids the transferring of timestamp information for each interval. Both sides, i.e. the sending side, which is the transmitting network entity TX, and the receiving side, which is the receiving network entity RX, send the information about the measured data packets in relation to the sending time interval TS[j] with j=0 to M-1 to a correlation/calculation function, which calculates the packet loss rate, preferably of an analyzing network entity A. The correlation function could be an immediately by a system collecting the data or delayed via e.g. a database or log file based system. A synchronized clock can be used between transmitting network entity TX and the receiving network entity RX but no good clock accuracy is required. In case of a continuously growing permanent drift between the clock of the transmitting and the clock of the receiving network entity should be avoided. Preferably, a self adjusting receiving clock raster, i.e. self adjusting time periods TS[j] with j=0 to M-1, can be used, which requires preferably one data packet sent per sending interval in addition.

First before turning to the detailed description of the figures 2 to 6 additional terms or equivalent terms are defined for enhancing the readability of these figures in combination with the detailed description of the figures 2 to 6:

A Loss rate measurement section (LRMS = Loss rate measurement section), which is embodied by a communication pipe Pi, represents the possibility of an encapsulation method, e.g. tunneling, SCTP streams, for switching logically between streams, which comprises the data packets send to the receiving network entity RX, by following preferably the same or different network path. The switching between the streams is transparent for the upper layer (the unencapsulated traffic). Following different network path is also possible.

Encapsulation allows also to aggregate traffic of the data packets. Instead of switching between streams also marking and/or tagging of the data packets for building LRMSs, i.e. communication pipes Pi, is also possible. This can be realized by using bits of the encapsulation traffic overhead, in case of encapsulation, or by using dedicated bits, in case of un-encapsulation, in the packet header.

The sender, i.e. transmitting network entity TX, iterates sequentially through LRMSs sending window, i.e. the time periods TS[j], with time length TS[j] with reiterations modulo N.

The receiving side, the receiving network entity RX, has for each LRMS a receiving window, i.e. the time periods TR[j], with time length TR(j)= TR0(j+N)-TR0(j) - $\Delta$E, especially for constant periods TS < TR $\leq$ N*TS - $\Delta$E, wherein N is amount of pipes and $\Delta$TE an additional delay time period, which can be a time space for which in well dimensioned measurement no packet should be received on RX side. Preferably $\Delta$E = 0 for synchronized systems. Preferably TR = N*TS for constant periods for synchronized systems. By means of the extra time takes data packet delay, e.g. due to traffic congestions, into account. It is possible that TR(j) and/or TS(j) are constant for all j=0 to M-1.

TX-Ci is also called a packet counter at the sending side, i.e. of the transmitting network entity TX. RX-Ci is also called a packet counter at the receiving side, i.e. of the receiving network entity RX.

Preferably, a minimum distance delay time DDT covers the shortest possible delay caused by transport technology between sender, i.e. the transmitting network entity TX, and receiver, i.e. the receiving network entity RX, which may be corrected by the clock inaccuracy in case of synchronized clocks of both in addition.

Embodiments according to the present invention may measure the packet loss rate one way continuously consisting of a traffic sender TX and a traffic receiver RX counting sent, i.e. directed, and/or received data packets within associated time intervals TS[j] and/or TR[j], respectively with j=0 to M-1. A modulo like time raster allows to identify the sender associated time interval TS[j] on receiver side for getting rid of transferring any timestamp and/or start or end marker.

In more detail:

The sender side TX can send data packets changing the LRMS, i.e. the communication pipe Pi, in equidistant time intervals TS[j] with j=0 to M-1,

Depending on the amount N of LRMS the changing reiterates modulo N. The sender TX counts for each LRMS the send, i.e. directed, data packets with a LRMS associated packet counter TX-Ci. When the time span of an ongoing LRMSi, i.e. communication pipe Pi, is over, the sender TX changes immediately the LRMS to LRMS((i+1)mod N) and sends and/or stores the measurement result of the LRMS(i) to/for the system, which may be provided by the analyzing network entity A, doing a correlation and/or a calculation of packet loss rate.

The receiver side RX receives data packets and is able to identify the different LRMSs, i.e. communication pipes Pi with i=0 to N-1, and to measure the received packets by the LRMS associated counters RX-Ci. The starting time TR0(j) of receiving time windows TR[j] with j=0 to M-1 is due to distance delay time DDT coming from the experienced distance shifted. An additional correction covering the clock offset including clock variation in case of synchronized systems is needed. The receiving time window TR[j] may be bigger than the sending time window TS[j], because of the packet delay variation MTD - DDT can larger than 0, demerging the received data packets coming from different LRMSs on the receiving side RX. Preferably, for totally unsynchronized receiver/sender constellations, an additional data packet is needed to be sent by sender TX at the beginning of measurement and

preferably if not any data packet is sent during a LRMS. The packet loss rate is calculated based on the correlated counted packets from sender and from receiver, the counters TX-Ci and RX-Ci. This can be done continuously after the time periods TS[j] and TR[j] are over on both sides for dedicated LRMSs. This means the receiving windows of different LRMS may overlap in time. However,

the receiving window TR[j] of the same LRMS, i.e. communication pipe Pi, must not overlap. Therefore the time periods length TR(j) and TS(j), and N should be chosen in correlation on the distance delay time variation MDT - DDT, i.e. the packet delay variation MDT - DDT, and a clock inaccuracy of the transmitting network entity TX and/or the receiving network entity RX. For short communication distances and well synchronized clocks between the sender TX and receiver RX choosing N=2 may work quite well. However, for longer communication distances or bad synchronized clocks of the transmitting network entity TX and/or the receiving network entity RX, a bigger N, preferably N>2, may allow increasing the receiving windows size TR(j) ensuring the correct demerging of received packets to the related LRMSs. Consequently, a high accuracy of the measurement of the packet loss rate can be achieved for a given delay variation time and/or distance delay time DDT by choosing larger time periods length TS (j) with j=0 to M-1 and/or by choosing more communication pipes Pi with i=0 to N-1, i.e. choosing a larger N.

With the above detailed description these described features of the present invention can be easily deduced from the figures 2 to 6.

Figure 2 shows an embodiment of the present invention with N=2 using switching between communication pipes P0 and P1 using tunnel interfaces, e.g. GRE tunnels having the same network path due to same tunnel endpoint IP addresses. The transmitting network entity TX comprises a packet toggle switch for switch the directed data packets the correspondingly assigned communication pipes P0 and P1, i.e. the LMRS. The receiving network entity RX comprises a packet merger for merging the received data packets. The packet counters TX-C0, TX-C1, RX-C0 and RX-C1 are reset at the beginning of the time periods TS[j] and TR[j], respectively, i.e. are reset at the time TS0(j) and TR0(j), respectively.

Figure 3 shows an embodiment of the present invention with N=2 using packet markers for defining the communication pipes P0 and P1 instead of the packet switching based embodiment shown in Figure 2. The down-arrow with bars grouped in time periods TS depicts the assignment to the communication pipes P0 and P1 using a packet multiplex method for transmitting the data packets to the receiving network entity RX. The up-arrow with bars grouped in constant time periods TR=N*TS with N=2 depicts the assignment to the communication pipes P0 and P1 according to the used packet multiplex method for receiving the data packets at the receiving network entity RX. The packet counters TX-C0, TX-C1, RX-C0 and RX-C1 are reset at the beginning of the time periods TS[j] and TR[j], respectively.

Figure 4 shows schematic traveltime-distance-curve and the receiving windows, i.e. time periods TR[j], for N=2, wherein the right hand side corresponds to the situation at the transmitting network entity TX and the left hand side corresponds to the situation at the receiving network entity RX. The minimum distance delay time DDT and the delay variation time TD is smaller than the time periods length TS[j] data packet counting can accurately be performed. Since the receiving time periods TR[j] and TR[j+N] do not overlap in time the measuring of the packet loss rate can be performed accurately.

Figure 5 shows schematic traveltime-distance-curve and the receiving windows, i.e. time periods TR[j], for an N=3, wherein the right hand side corresponds to the situation at the transmitting network entity TX and the left hand side corresponds to the situation at the receiving network entity RX. Figure 5 shows a similar case to that shown in figure 4. However, the case shown in figure 5 differs to that in figure 4 by the fact that the delay time is of the size of the time periods TS. In order to perform an accurate measurement of the packet loss rate a third communication pipe P2 is required. However, also in this case the receiving time periods TR[j] and TR[j+N] do not overlap in time so that the measuring of the packet loss rate can be performed accurately.

The Figures 6a and 6b show in detail the relation between the transmitting time slits TS0(j) and the receiving time slits TR0[j] with j=0 to M-1 and their relation to the receiving time periods TR[j] with j=0 to M-1.

Figure 6a shows schematic traveltime-distance-curve and the receiving windows, i.e. time periods TR[j] using timestamps in an unsynchronized system, for N=2. The transmitting network entity TX provides the beginning time TS0 (j) of each time period TS[j] as timestamp to the receiving network entity RX. The receiving network entity RX uses the timestamp providing the beginning time TS0(j) for determining raster offset based time stamp of timestamp packet. The raster offset is given by

$$\text{Raster offset} = \text{timestamp info receiving time} - TS0(j), \qquad j=0 \text{ to } M-1,$$

wherein the offset is adjusted with each received timestamp information. Preferably, TS(j) is constant, then the transmitting time slits TS0(j) may be given by

$$TS0(j) = Tref + j * TS, \qquad j=0 \text{ to } M-1,$$

wherein just delivering index j may be delivered to RX side.

The transmitting time slits TS0(j) are related to the receiving time slits TR0(j) by means of the timestamp. The respective receiving time periods TR[j] are chosen such that

$$TS(j) < TR(j) \leq TS0(j+N) - TS0(j) - \Delta E, \qquad j=0 \text{ to } M-1,$$

wherein $\Delta E$ is a numerical, preferably constant, parameter greater or equal 0 which can assure that the receiving time periods TR[j] and TR[j+N] do not overlap in time. Preferably, TS(j) and TR(j) are constant, i.e.

$$TS < TR \leq N^* TS - \Delta E.$$

Packets received during ΔE may be not measured at all and may give an indication, that the TR0(j) are not determined correctly or the MTD is not estimated good enough or the TR is not big enough. For unsynchronized systems it can also be used to adjust the timing raster. So ΔE could be a time range indicating that something is wrong. This could be preferable zero means disabling this detection. In this case TR = N*TS, which means there is no gap between counting data packets on receiving side.

Figure 6b shows schematic traveltime-distance-curve and the receiving windows, i.e. time periods TR[j] in a synchronized system, for N=2. The reference time of the transmitting network entity TX is Tref and the reference time of the receiving network entity RX is T'ref. The clock deviation ΔC is given by

$$\Delta C = T'ref - Tref.$$

In contrast to the preferred embodiment of the present invention of figure 6a there is no requirement of a timestamp in the preferred embodiment of the present invention of figure 6b, i.e. the information provided by the timestamp is comparably provided by using a distance delay time DDT and the clock deviation ΔC. The distance delay time DDT can respect the time used by the communication distance between transmitting network entity TX and the receiving network entity RX. The transmitting time slits TS[j] are given by

$$TS[j] = [\ TS0(j)\ ,\ TS0(j+1)\ [ \quad , \quad j=0 \text{ to } M-1,$$

wherein the duration of period TS[j] can be calculated by TS(j)=TS0(j+1)-TS0(j).

Preferably, TS(j) is constant, then the transmitting time slits TS0(j) may be given by

$$TS0(j) = Tref + j * TS, \qquad j=0 \text{ to } M-1.$$

The respective receiving time slits TR[j] are given by

$$TR[j] = [\ TR0(j)\ ,\ TR(j+N) - \Delta E\ [ \quad , \quad j=0 \text{ to } M-1,$$

wherein the association with the communication pipes Pi may be given by i being congruent j modulo N, i.e. i ≡ j mod N.

Preferably, the sending time period lengths TS(j)=TS are constant, then the receiving time slits duration TR(j) may be given by

$$TR(j) = [TR0(j)\ ,\ TR0(j) + N^*TS\ - \Delta E\ [ \quad , \quad j=0 \text{ to } M-1.$$

However, the receiving time period TR[i] has to take the clock deviation ΔC and the distance delay time DDT into account, i.e. TR[j] can be given for constant time period lengths TS(j) = TS by

$$TR0(j) = T'ref + j^*TS + DDT - \Delta C, \qquad j=0 \text{ to } M-1 \text{ for constant period},$$

wherein DDT - ΔC can be greater than 0.

Furthermore, TR(j) may also fulfill

$$TS(j) + \Delta C + MDT - DDT \leq TR(j) \leq TR0(j + N) - TR0(j) - \Delta E,$$

which is for constant TS(j) and TR(j) given by

$$TS + \Delta C + MDT - DDT < TR \leq N^*TS - \Delta E, \qquad j=0 \text{ to } M-1,$$

TS0'(j) is the beginning time reference of the period TS[j] in view of the receiving network entity RX, wherein TS0(j) difference between beginning of receiving time slit TR0(j) and the minimum distance delay time DDT rounded to the timing raster TS0(j).

For constant TS(j)

$$TS0'(j) = T'ref + j^* \; TS, \qquad j=0 \text{ to } M-1.$$

The transmitting time slits TS0(j) are related to the receiving time slits TR0(j) by means of the TS0'(j). Instead of using TS0'(j) as reference just index j can be taken also.

Figure 6c shows schematic traveltime-distance-curve and the receiving windows, i.e. time periods TR[j] in a self adjusting receiving clock raster system, i.e. self adjusting time periods TR[j] with j=0 to M-1, wherein N=3 communication pipes Pi are used. The embodiment of figure 6b is an alternative to those shown in the figures 6a and 6b. The receiving time periods TR[j] with j=0 to M-1 are self adjusted. At the starting of the method the transmitting network entity TX sends an initial TS(j) timestamp and/or index j. The receiving time is used to determine and estimated assumed raster offset to the receiving network entity RX, preferably together with the beginning time TS0(j) and/or index j. The raster offset is adjusted if during the i-th being j-1 modulo N receiving time period a data packet is received during time period ΔE. In case receiving packets at the beginning of ΔE period the offset is corrected by increasing the raster offset. In case receiving packets at the end of ΔE period the offset is corrected by reducing the raster offset. Preferably, the length of the time periods TS(j) as well as the delay time ΔE are constant. Such an approach might be advantageous if a continuously growing permanent drift between the clock of the transmitting and the clock of the receiving network entity is existing.

## Claims

1. A method of measuring a packet loss rate in a packet-based communication network (C) between a transmitting network entity (TX) and a receiving network entity (RX) of the communication network (C), wherein the method comprises the steps of:

   assigning, by the transmitting network entity (TX), a series of M ≥ N ≥ 2 time periods TS[j] with j=0 to M-1 to N communication pipes Pi with i=0 to N-1, the communication pipe Pi being assigned to the time period TS[j] with i being congruent to j modulo N, and using the communication pipe Pi during its correspondingly assigned time period TS[j] for transmitting the data packets within the time period TS[j], the data packets being directed to the receiving network entity (RX),
   counting, by the transmitting network entity (TX), the number of the directed data packets TX-Ci for each time period TS[j], transmitting, by the transmitting network entity (TX), the directed data packets via the assigned communication pipe Pi to the to the receiving network entity (RX),
   receiving, by the receiving network entity (RX), data packets transmitted via the communication pipes Pi with i=0 to N-1 during time periods TR[j] associated with the respective time periods TS[j] with j=0 to M-1, counting, by the receiving network entity (RX), the number of the received data packets RX-Ci for each time period TR[j], and measuring the packet loss rate by a calculation based on the number of directed data packets TX-Ci and the number of received data packets RX-Ci.

2. The method according to claim 1,
   wherein the method comprises the step of:

setting, by the receiving network entity (RX), the beginning time TR0(j) of the time period TR[j] to the sum of a reference time T'ref at the receiving network entity, the respective time period TR[j] and a distance delay time DDT, wherein the distance delay time DDT is a time period which is related to a minimum time required by a data packet for traveling from the transmitting network entity (TX) to the receiving network entity (RX) via the communication network (C).

**3.** The method according to claim 1,
wherein the method comprises the steps of:

initializing, by the transmitting network entity (TX), the measurement of the packet loss rate by sending a timestamp to the receiving network entity (RX), and
determining, by the receiving network entity (RX), a distance delay time DDT associated with the communication distance between the transmitting network entity (TX) and the receiving network entity (RX).

**4.** The method according to claim 1,
wherein the method comprises the step of:

sending, by the transmitting network entity (TX), a timestamp at the beginning of the first time period TS[0] or the time periods TS[j] with j=0 to M-1.

**5.** The method according to claim 1,
wherein the method comprises the steps for measuring the packet loss rate by calculation of:

providing, by the transmitting network entity (TX), the number of directed data packets TX-Ci to an analyzing network entity (A),
providing, by the receiving network entity (RX), the number of received data packets RX-Ci to the analyzing network entity (A), and
calculating, by the analyzing network entity (A), the packet loss rate by subtracting the number of directed data packets TX-Ci from the number of received data packets RX-Ci and dividing the result of the subtraction by the number of directed data packets TX-Ci or by the length of respective time period TS[j].

**6.** The method according to claim 5,
wherein the analyzing network entity (A) is provided by the transmitting network entity (TX), the receiving network entity (RX), or a further network entity which preferably is a network management entity of the communication network (C).

**7.** The method according to claim 1,
wherein the N communication pipes Pi with i=0 to N-1 are communication tunnels or channels (P0, P1) comprising two or more packet flows.

**8.** The method according to claim 1,
wherein the method comprises the steps of:

inserting, by the transmitting network entity (TX), a packet marker in the packet headers of the directed data packets associated with the respective communication pipe Pi for using the communication pipe Pi during its correspondingly assigned time period TS[j], and
assigning, by the receiving network entity (RX), the received data packets to the respective time period TR[j] in accordance with the packet marker of the received data packets.

**9.** The method according to claim 1,
wherein the method comprises the steps of:

resetting, by the transmitting network entity (TX), the number of directed data packets TX-Ci to 0 at the beginning of the time periods TS[j] with j=0 to M-1, and
resetting, by the receiving network entity (RX), the number of received data packets RX-Ci to 0 at the beginning of the time periods TR[j] with j=0 to M-1.

**10.** The method according to claim 1,

wherein the N communication pipes Pi with i=0 to N-1 are different physical channels or channels (P0, P1) provided according to a time, frequency and/or code multiplex method, and or a marking method.

**11.** The method according to claim 1,
wherein the transmitting network entity (TX) is at a starting point (S) of a communication path of the transmitted data packets or at a point within the communication path of the transmitted data packets, and
wherein the receiving network entity (RX) is at an end point (E) of a communication path of the transmitted data packets or at an point within the communication path of the received data packets.

**12.** The method according to claim 1,
wherein the method comprises the step of:

storing, preferably by a network management entity (A) of the communication network (C), the measured packet loss rates for enabling a performance analysis of the communication network (C).

**13.** A transmitting network entity (TX) for measuring a packet loss rate in a packet-based communication network (C) between the transmitting network entity (TX) and a receiving network entity (RX) of the communication network (C), wherein the transmitting network entity (TX) comprises a control unit (NC) adapted to assign a series of $M \geq N \geq 2$ time periods TS[j] with j=0 to M-1 to N communication pipes Pi with i=0 to N-1, the communication pipe Pi being assigned to the time period TS[j] with i being congruent to j modulo N, and use the communication pipe Pi during its correspondingly assigned time period TS[j] for transmitting the data packets within the time period TS[j], the data packets being directed to the receiving network entity (RX), to count the number of the directed data packets TX-Ci for each time period TS[j], to transmit the directed data packets via the assigned communication pipe Pi to the to the receiving network entity (RX), and to provide the number of the directed data packets TX-Ci to an analyzing network entity (A) for measuring the packet loss rate by a calculation based on the number of directed data packets TX-Ci.

**14.** A receiving network entity (RX) for measuring a packet loss rate in a packet-based communication network (C) between a transmitting network entity (TX) and the receiving network entity (RX) of the communication network (C), wherein the receiving network entity (RX) comprises a control unit (NC) adapted to receive data packets transmitted from the transmitting network entity (TX) via $N > 0$ communication pipes Pi with i=0 to N-1 during a series of $M \geq N \geq 2$ time periods TS[j] with j=0 to M-1, the communication pipe Pi being assigned to the time period TS[j] with i being congruent to j modulo N, and use the communication pipe Pi during a correspondingly assigned time period TR[j] for receiving the data packets within the time period TR[j], to count the number of the received data packets RX-Ci for each time period TR[j], and to provide the number of the received data packets RX-Ci to an analyzing network entity (A) for measuring the packet loss rate by a calculation based on the number of received data packets RX-Ci.

**15.** A system for measuring a packet loss rate in a packet-based communication network (C) wherein the system comprises a transmitting network entity (TX) and a receiving network entity (RX) and an analyzing network entity (A), wherein the transmitting network entity (TX) comprises a control unit (NC) adapted to assign a series of $M \geq N \geq 2$ time periods TS[j] with j=0 to M-1 to N communication pipes Pi with i=0 to N-1, the communication pipe Pi being assigned to the time period TS[j] with i being congruent to j modulo N, and using the communication pipe Pi during its correspondingly assigned time period TS[j] for transmitting the data packets within the time period TS[j], the data packets being directed to the receiving network entity (RX), to count the number of the directed data packets TX-Ci for each time period TS[j], and to transmit the directed data packets via the assigned communication pipe Pi to the to the receiving network entity (RX), wherein the receiving network entity (RX) comprises a control unit adapted to receive data packets transmitted via the communication pipes Pi with i=0 to N-1 during time periods TR[j] associated with the respective time periods TS[j] with j=0 to M-1, to count the number of the received data packets RX-Ci for each time period TR[j], and wherein the analyzing network entity (A) comprises a control unit adapted to measure the packet loss rate by a calculation based on the number of directed data packets TX-Ci and the number of received data packets RX-Ci.

**Patentansprüche**

**1.** Verfahren zum Messen einer Paketverlustrate in einem paketbasierten Kommunikationsnetzwerk (C) zwischen einer übertragenden Netzwerkentität (TX) und einer empfangenden Netzwerkentität (RX) des Kommunikationsnetzwerks (C), wobei das Verfahren die folgenden Schritte umfasst:

Zuordnen, durch die übertragende Netzwerkentität (TX), einer Folge von $M \geq N \geq 2$ Zeitspannen TS[j] mit j=0 bis M-1 an N Kommunikationsleitungen Pi mit i=0 bis N-1, wobei die Kommunikationsleitung Pi der Zeitspanne TS[j] zugeordnet wird, wobei i kongruent zu j Modulo N ist, und Verwenden der Kommunikationsleitung Pi während ihrer entsprechend zugeordneten Zeitspanne TS[j] für die Übertragung der Datenpakete innerhalb der Zeitspanne TS[j], wobei die Datenpakete an die empfangende Netzwerkentität (RX) gesendet werden,
Zählen, durch die übertragende Netzwerkentität (TX), der Anzahl der gesendeten Datenpakete TX-Ci für jede Zeitspanne TS[j],
Übertragen, durch die übertragende Netzwerkentität (TX), der zu sendenden Datenpakete über die zugeordnete Kommunikationsleitung Pi an die empfangende Netzwerkentität (RX),
Empfangen, an der empfangenden Netzwerkentität (RX), der über die Kommunikationsleitungen Pi mit i=0 bis N-1 während den mit den jeweiligen Zeitspannen TS[j] mit j=0 bis M-1 assoziierten Zeitspannen TR[j] übertragenen Datenpakete,
Zählen, durch die empfangende Netzwerkentität (RX), der Anzahl der empfangenen Datenpakete RX-Ci für jede Zeitspanne TR[j], und
Messen der Paketverlustrate anhand einer Berechnung basierend auf der Anzahl der gesendeten Datenpakete TX-Ci und der Anzahl der empfangenen Datenpakete RX-Ci.

**2.** Verfahren nach Anspruch 1,
wobei das Verfahren den folgenden Schritt umfasst:

Einstellen, durch die empfangende Netzwerkentität (RX), der Anfangszeit TR0(j) der Zeitspanne TR[j] auf die Summe einer Referenzzeit T'ref an der empfangenden Netzwerkentität, der jeweiligen Zeitspanne TR[j] und einer Abstandsverzögerungszeit DDT, wobei die Abstandsverzögerungszeit DDT eine Zeitspanne ist, welche sich auf eine Mindestzeit, die ein Datenpaket benötigt, um über das Kommunikationsnetzwerk (C) von der übertragenden Netzwerkentität (TX) zu der empfangenden Netzwerkentität (RX) zu gelangen, bezieht.

**3.** Verfahren nach Anspruch 1,
wobei das Verfahren die folgenden Schritte umfasst:

Initialisieren, durch die übertragende Netzwerkentität (TX), der Messung der Paketverlustrate durch Senden eines Zeitstempels an die empfangende Netzwerkentität (RX), und
Bestimmen, durch die empfangende Netzwerkentität (RX), einer mit dem Kommunikationsabstand zwischen der übertragenden Netzwerkentität (TX) und der empfangenden Netzwerkentität (RX) assoziierten Abstandsverzögerungszeit DDT.

**4.** Verfahren nach Anspruch 1,
wobei das Verfahren den folgenden Schritt umfasst:

Senden, durch die übertragende Netzwerkentität (TX), eines Zeitstempels am Anfang der ersten Zeitspanne TS[0] oder der Zeitspannen TS[j] mit j=0 bis M-1.

**5.** Verfahren nach Anspruch 1,
wobei das Verfahren die folgenden Schritte zum Messen der Paketverlustrate anhand der folgenden Berechnungen umfasst:

Bereitstellen, durch die übertragende Netzwerkentität (TX), der Anzahl der gesendeten Datenpakete TX-Ci an eine analysierende Netzwerkentität (A), Bereitstellen, durch die empfangende Netzwerkentität (RX), der Anzahl der empfangenen Datenpakete RX-Ci an die analysierende Netzwerkentität (A), und
Berechnen, durch die analysierende Netzwerkentität (A), der Paketverlustrate durch Subtrahieren der Anzahl der gesendeten Datenpakete TX-Ci von der Anzahl der empfangenen Datenpakete RX-Ci, und Dividieren des Ergebnisses der Subtraktion durch die Anzahl der gesendeten Datenpakete TX-Ci oder durch die Länge der jeweiligen Zeitspanne TS[j].

**6.** Verfahren nach Anspruch 5,
wobei die analysierende Netzwerkentität (A) durch die übertragende Netzwerkentität (TX), die empfangende Netzwerkentität (RX) oder eine weitere Netzwerkentität, welche vorzugsweise eine Netzwerkverwaltungsentität des Kommunikationsnetzwerks (C) ist, bereitgestellt wird.

**7.** Verfahren nach Anspruch 1, wobei die N Kommunikationsleitungen Pi mit i=0 bis N-1 Kommunikationstunnel oder -kanäle (P0, P1) mit zwei oder mehr Paketflüssen umfassen.

**8.** Verfahren nach Anspruch 1, wobei das Verfahren die folgenden Schritte umfasst:

Einfügen, durch die übertragende Netzwerkentität (TX), einer Paketkennzeichnung in die Paket-Header der mit der jeweiligen Kommunikationsleitung Pi assoziierten zu sendenden Datenpakete, um die Kommunikationsleitung Pi während ihrer entsprechend zugeordneten Zeitspanne TS[j] zu verwenden, und Zuordnen, durch die empfangende Netzwerkentität (RX), der empfangenen Datenpakete zu der jeweiligen Zeitspanne TR[j] gemäß der Paketkennzeichnung der empfangenen Datenpakete.

**9.** Verfahren nach Anspruch 1, wobei das Verfahren die folgenden Schritte umfasst:

Rückstellen, durch die übertragende Netzwerkentität (TX), der Anzahl der gesendeten Datenpakete TX-Ci auf 0 am Anfang der Zeitspannen TS[j] mit j=0 bis M-1, und
Rückstellen, durch die empfangende Netzwerkentität (RX), der Anzahl der empfangenen Datenpakete RX-Ci auf 0 am Anfang der Zeitspannen TR[j] mit j=0 bis M-1.

**10.** Verfahren nach Anspruch 1, wobei die N Kommunikationsleitungen Pi mit i=0 to N-1 unterschiedliche physische Kanäle oder gemäß einer Zeit, einer Frequenz und/oder einem Code-Multiplexverfahren, und/oder einem Kennzeichnungsverfahren bereitgestellte Kanäle (P0, P1) sind.

**11.** Verfahren nach Anspruch 1, wobei sich die übertragende Netzwerkentität (TX) an einem Startpunkt (S) eines Kommunikationspfads der übertragenen Datenpakete oder an einem Punkt innerhalb des Kommunikationspfads der übertragenen Datenpakete befindet, und wobei sich die empfangende Netzwerkentität (RX) an einem Endpunkt (E) eines Kommunikationspfads der übertragenen Datenpakete oder an einem Punkt innerhalb des Kommunikationspfads der übertragenen Datenpakete befindet.

**12.** Verfahren nach Anspruch 1, wobei das Verfahren den folgenden Schritt umfasst:

Speichern, vorzugsweise durch eine Netzwerkverwaltungsentität (A) des Kommunikationsnetzwerks (C), der gemessenen Paketverlustraten, um eine Leistungsanalyse des Kommunikationsnetzwerks (C) zu ermöglichen.

**13.** Übertragende Netzwerkentität (TX) zum Messen einer Paketverlustrate in einem paketbasierten Kommunikationsnetzwerk (C) zwischen der übertragenden Netzwerkentität (TX) und einer empfangenden Netzwerkentität (RX) des Kommunikationsnetzwerks (C), wobei die übertragende Netzwerkentität (TX) eine Steuereinheit (NC) umfasst, welche für das Zuordnen einer Folge von $M \geq N \geq 2$ Zeitspannen TS[j] mit j=0 bis M-1 an N Kommunikationsleitungen Pi mit i=0 bis N-1, wobei die Kommunikationsleitung Pi der Zeitspanne TS[j] zugeordnet wird, wobei i kongruent zu j Modulo N ist, und für das Verwenden der Kommunikationsleitung Pi während ihrer entsprechend zugeordneten Zeitspanne TS[j] für die Übertragung der Datenpakete innerhalb der Zeitspanne TS[j], wobei die Datenpakete an die empfangende Netzwerkentität (RX) gesendet werden, für das Zählen der Anzahl der zu sendenen Datenpakete TX-Ci für jede Zeitspanne TS[j], für das Übertragen der zu sendenden Datenpakete über die zugeordnete Kommunikationsleitung Pi an die empfangende Netzwerkentität (RX) und für das Bereitstellen der Anzahl der gesendeten Datenpakete TX-Ci an eine analysierende Netzwerkentität (A) zum Messen der Paketverlustrate anhand einer Berechnung auf Basis der Anzahl der gesendeten Datenpakete TX-Ci ausgelegt ist.

**14.** Empfangende Netzwerkentität (RX) zum Messen einer Paketverlustrate in einem paketbasierten Kommunikationsnetzwerk (C) zwischen einer übertragenden Netzwerkentität (TX) und einer empfangenden Netzwerkentität (RX) des Kommunikationsnetzwerks (C), wobei die empfangende Netzwerkentität (RX) eine Steuereinheit (NC) umfasst, welche für den Empfang von von der übertragenden Netzwerkentität (TX) über $N > 0$ Kommunikationsleitungen Pi mit i=0 bis N-1 während einer Folge von $M \geq N \geq 2$ Zeitspannen TS[j] mit j=0 bis M-1 übertragenen Datenpaketen, wobei die Kommunikationsleitung Pi der Zeitspanne TS[j] zugeordnet ist, wobei i kongruent zu j Modulo N ist, und für das Verwenden der Kommunikationsleitung Pi während einer entsprechend zugeordneten Zeitspanne TR[j] für den Empfang der Datenpakete innerhalb der Zeitspanne TR[j], für das Zählen der Anzahl der empfangenen RX-Ci für jede Zeitspanne TR[j], und für das Bereitstellen der Anzahl der empfangenen Datenpakete RX-Ci an eine analysierende Netzwerkentität (A) zum Messen der Paketverlustrate anhand einer Berechnung auf Basis der Anzahl der empfangenen Datenpakete RX-Ci ausgelegt ist.

**15.** System zum Messen einer Paketverlustrate in einem paketbasierten Kommunikationsnetzwerk (C), wobei das System eine übertragende Netzwerkentität (TX) und eine empfangende Netzwerkentität (RX) sowie eine analysierende Netzwerkentität (A) umfasst, wobei die übertragende Netzwerkentität (TX) eine Steuereinheit (NC) umfasst, welche für das Zuordnen einer Folge von M ≥ N ≥2 Zeitspannen TS[j] mit j=0 bis M-1 an N Kommunikationsleitungen Pi mit i=0 bis N-1, wobei die Kommunikationsleitung Pi der Zeitspanne TS[j] zugeordnet wird, wobei i kongruent zu j Modulo N ist, und für das Verwenden der Kommunikationsleitung Pi während ihrer entsprechend zugeordneten Zeitspanne TS[j] für die Übertragung der Datenpakete innerhalb der Zeitspanne TS[j], wobei die Datenpakete an die empfangende Netzwerkentität (RX) gesendet werden, für das Zählen der Anzahl der gesendeten Datenpakete TX-Ci für jede Zeitspanne TS[j], und für das Übertragen der zu sendenden Datenpakete über die zugeordnete Kommunikationsleitung Pi an die empfangende Netzwerkentität (RX), ausgelegt ist, wobei die empfangende Netzwerkentität (RX) eine Steuereinheit umfasst, welche für den Empfang von Datenpaketen, die über die Kommunikationsleitungen Pi mit i=0 bis N-1 während mit den jeweiligen Zeitspannen TS[j] mit j=0 bis M-1 assoziierten Zeitspannen TR[j] übertragen werden, und für das Zählen der Anzahl der empfangenen Datenpakete RX-Ci für jede Zeitspanne TR [j] ausgelegt ist, und wobei die analysierende Netzwerkentität (A) eine Steuereinheit umfasst, welche für das Messen der Paketverlustrate anhand einer Berechnung auf Basis der Anzahl der gesendeten Datenpakete TX-Ci und der Anzahl der empfangenen Datenpakete RX-Ci ausgelegt ist.

## Revendications

**1.** Procédé de mesure d'un taux de perte de paquets dans un réseau de communication en paquets (C) entre une entité de réseau de transmission (TX) et une entité de réseau de réception (RX) du réseau de communication (C), dans lequel le procédé comprend les étapes suivantes :

assigner, par l'entité de réseau de transmission (TX), une série de M ≥ N ≥ 2 périodes temporelles TS[j] avec j=0 à M-1 à N tuyaux de communication Pi avec i=0 à N-1, le tuyau de communication Pi étant attribué à la période temporelle TS[j], i étant congruent avec j modulo N, et utiliser le tuyau de communication Pi pendant sa période temporelle assignée correspondante TS[j] pour transmettre les paquets de données dans la période temporelle TS[j], les paquets de données étant dirigés vers l'entité de réseau de réception (RX),
compter, par l'entité de réseau de transmission (TX), le nombre de paquets de données dirigés TX-Ci pour chaque période temporelle TS[j], transmettre, par l'entité de réseau de transmission (TX), les paquets de données dirigés via le tuyau de communication assigné Pi à l'entité de réseau de réception (RX),
recevoir, par l'entité de réseau de réception (RX), les paquets de données transmis via les tuyaux de communication Pi avec i=0 à N-1 pendant les périodes temporelles TR[j] associées aux périodes temporelles TS[j] respectives avec j=0 à M-1, compter, par l'entité de réseau de réception (RX), le nombre de paquets de données reçus RX-Ci pour chaque période temporelle TR[j] et mesurer le taux de perte de paquets au moyen d'un calcul basé sur le nombre de paquets de données dirigés TX-Ci et le nombre de paquets de données reçus RX-Ci.

**2.** Procédé selon la revendication 1,
le procédé comprenant l'étape suivante :

définir, par l'entité de réseau de réception (RX), le temps de début TR0(j) de la période temporelle TR[j] comme la somme d'un temps de référence T'ref sur l'entité de réseau de réception, de la période temporelle TR[j] respective et d'un temps de retard dû à la distance DDT, dans lequel le temps de retard dû à la distance DDT est une période temporelle associée à un temps minimum requis par un paquet de données pour passer de l'entité de réseau de transmission (TX) à l'entité de réseau de réception (RX) via le réseau de communication (C).

**3.** Procédé selon la revendication 1,
le procédé comprenant les étapes suivantes :

initialiser, par l'entité de réseau de transmission (TX), la mesure du taux de perte de paquets en envoyant une estampille temporelle à l'entité de réseau de réception (RX), et

déterminer, par l'entité de réseau de réception (RX),un temps de retard dû à la distance DDT associé à la distance de communication entre l'entité de réseau de transmission (TX) et l'entité de réseau de réception (RX).

**4.** Procédé selon la revendication 1,
le procédé comprenant l'étape suivante :

envoyer, par l'entité de réseau de transmission (TX), une estampille temporelle au début de la première période temporelle TS[0] ou des périodes temporelles TS[j) avec j=0 à M-1.

**5.** Procédé selon la revendication 1,
dans lequel le procédé comprend les étapes de mesure du taux de perte de paquets au moyen du calcul suivant :

fournir, par l'entité de réseau de transmission (TX), le nombre de paquets de données dirigés TX-Ci à une entité de réseau d'analyse (A), fournir, par l'entité de réseau de réception (RX), le nombre de paquets de données reçus RX-Ci à l'entité de réseau d'analyse (A), et
calculer, par l'entité de réseau d'analyse (A), le taux de perte de paquets en soustrayant le nombre de paquets de données dirigés TX-Ci du nombre de paquets de données reçus RX-Ci et en divisant le résultat de la soustraction par le nombre de paquets de données dirigés TX-Ci ou par la longueur de la période temporelle TS[j] respective.

**6.** Procédé selon la revendication 5,
dans lequel l'entité de réseau d'analyse (A) est fournie par l'entité de réseau de transmission (TX), l'entité de réseau de réception (RX) ou une autre entité de réseau qui est de préférence une entité de gestion de réseau du réseau de communication (C).

**7.** Procédé selon la revendication 1,
dans lequel les N tuyaux de communication Pi avec i=0 à N-1 sont des tunnels ou des canaux de communication (P0, P1) comprenant deux flux de paquets ou plus.

**8.** Procédé selon la revendication 1,
le procédé comprenant les étapes suivantes :

insérer, par l'entité de réseau de transmission (TX), un marqueur de paquets dans les en-têtes de paquet des paquets de données dirigés associés au tuyau de communication Pi respectif pour utiliser le tuyau de communication Pi pendant sa période temporelle assignée correspondante TS[j] et assigner, par l'entité de réseau de réception (RX), les paquets de données reçus à la période temporelle respective TR[j] conformément au marqueur de paquets des paquets de données reçus.

**9.** Procédé selon la revendication 1,
le procédé comprenant les étapes suivantes :

redéfinir, par l'entité de réseau de transmission (TX), le nombre de paquets de données dirigés TX-Ci à 0 au début des périodes temporelles TS[j] avec j=0 à M-1, et redéfinir, par l'entité de réseau de réception (RX), le nombre de paquets de données reçus RX-Ci à 0 au début des périodes temporelles TR[j] avec j=0 à M-1.

**10.** Procédé selon la revendication 1,
dans lequel les N tuyaux de communication Pi avec i=0 à N-1 sont des canaux physiques différents ou des canaux (P0, P1) fournis selon une méthode de multiplexage par répartition dans le temps, en fréquence et/ou en code et/ou une méthode de marquage.

**11.** Procédé selon la revendication 1,
dans lequel l'entité de réseau de transmission (TX) se trouve à un point de début (S) d'un chemin de communication des paquets de données transmis ou à un point dans le chemin de communication des paquets de données transmis, et
dans lequel l'entité de réseau de réception (RX) se trouve à un point de fin (E) d'un chemin de communication des paquets de données transmis ou à un point dans le chemin de communication des paquets de données reçus.

**12.** Procédé selon la revendication 1,

le procédé comprenant l'étape suivante :

stocker, de préférence par une entité de gestion de réseau (A) du réseau de communication (C), les taux de perte de paquets pour permettre une analyse de performance du réseau de communication (C).

**13.** Entité de réseau de transmission (TX) pour mesurer un taux de perte de paquets dans un réseau de communication en paquets (C) entre l'entité de réseau de transmission (TX) et une entité de réseau de réception (RX) du réseau de communication (C), dans laquelle l'entité de réseau de transmission (TX) comprend une unité de commande (NC) adaptée pour assigner une série de $M \geq N \geq 2$ périodes temporelles TS[j] avec j=0 à M-1, à N tuyaux de communication Pi avec i=0 à N-1, le tuyau de communication Pi étant assigné à la période temporelle TS[j], i étant congruent avec j modulo N, et utiliser le tuyau de communication Pi pendant sa période temporelle assignée correspondante TS[j] pour transmettre les paquets de données dans la période temporelle TS[j], les paquets de données étant dirigés vers l'entité de réseau de réception (RX), compter le nombre de paquets de données dirigés TX-Ci pour chaque période temporelle TS[j], transmettre les paquets de données dirigés via le tuyau de communication assigné Pi à l'entité de réseau de réception (RX) et fournir le nombre de paquets de données dirigés TX-Ci à une entité de réseau d'analyse (A) pour mesurer le taux de perte de paquets au moyen d'un calcul basé sur le nombre de paquets de données dirigés TX-Ci.

**14.** Entité de réseau de réception (RX) pour mesurer un taux de perte de paquets dans un réseau de communication en paquets (C) entre une entité de réseau de transmission (TX) et l'entité de réseau de réception (RX) du réseau de communication (C), dans laquelle l'entité de réseau de réception (RX) comprend une unité de commande (NC) adaptée pour recevoir des paquets de données transmis depuis l'entité de réseau de transmission (TX) via $N > 0$ tuyaux de communication Pi avec i=0 à N-1 pendant une série de $M \geq N \geq 2$ périodes temporelles TS[j] avec j=0 à M-1, le tuyau de communication Pi étant assigné à la période temporelle TS[j], i étant congruent avec j modulo N, et utiliser le tuyau de communication Pi pendant une période temporelle assignée correspondante TR[j] pour recevoir les paquets de données dans la période temporelle TR[j], compter le nombre de paquets de données reçus RX-Ci pour chaque période temporelle TR[j] et fournir le nombre de paquets de données reçus RX-Ci à une entité de réseau d'analyse (A) pour mesurer le taux de perte de paquets au moyen d'un calcul basé sur le nombre de paquets de données reçus RX-Ci.

**15.** Système pour mesurer un taux de perte de paquets dans un réseau de communication en paquets (C), dans lequel le système comprend une entité de réseau de transmission (TX) et une entité de réseau de réception (RX) et une entité de réseau d'analyse (A), dans lequel l'entité de réseau de transmission (TX) comprend une unité de commande (NC) adaptée pour assigner une série de $M \geq N \geq 2$ périodes temporelles TS[j] avec j=0 à M-1, à N tuyaux de communication Pi avec i=0 à N-1, le tuyau de communication Pi étant assigné à la période temporelle TS[j], i étant congruent avec j modulo N, et utilisant le tuyau de communication Pi pendant sa période temporelle assignée correspondante TS[j] pour transmettre les paquets de données dans la période temporelle TS[j], les paquets de données étant dirigés vers l'entité de réseau de réception (RX), compter le nombre de paquets de données dirigés TX-Ci pour chaque période temporelle TS[j], et transmettre les paquets de données dirigés via le tuyau de communication assigné Pi à l'entité de réseau de réception (RX), dans lequel l'entité de réseau de réception (RX) comprend une unité de commande adaptée pour recevoir les paquets de données transmis via les tuyaux de communication Pi avec i=0 à N-1 pendant les périodes temporelles TR[j] associées aux périodes temporelles TS[j] respectives avec j=0 à M-1, compter le nombre de paquets de données reçus RX-Ci pour chaque période temporelle TR[j] et dans lequel l'entité de réseau d'analyse (A) comprend une unité de commande adaptée pour mesurer le taux de perte de paquets au moyen d'un calcul basé sur le nombre de paquets de données dirigés TX-Ci et le nombre de paquets de données reçus RX-Ci.

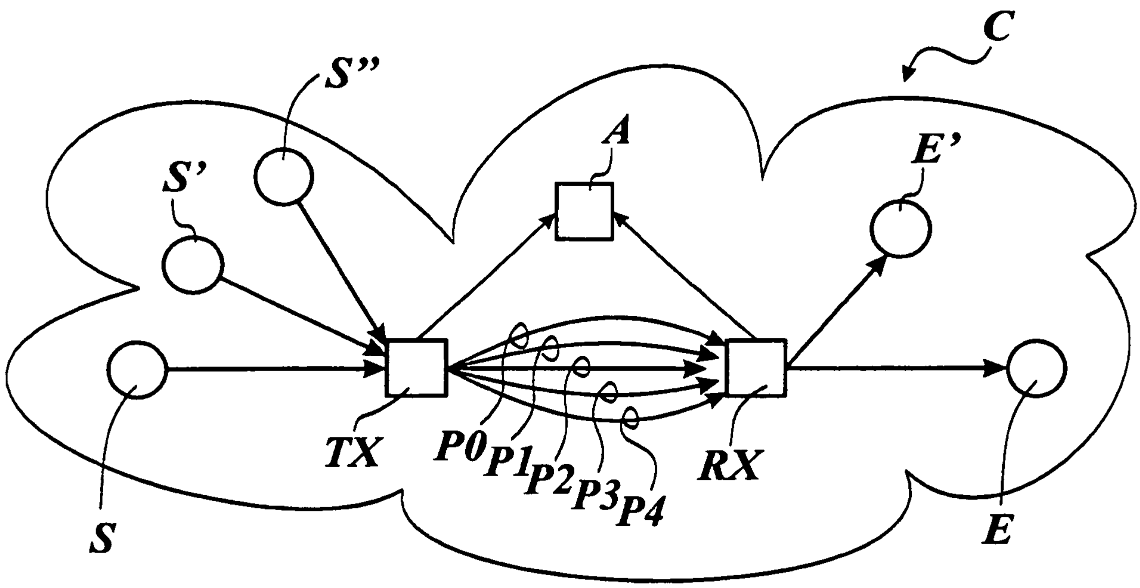


Fig. 1a

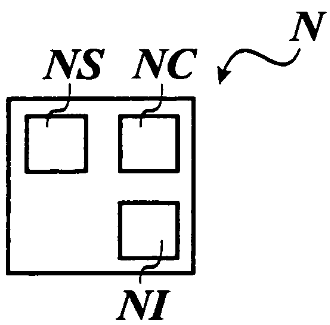


Fig. 1b

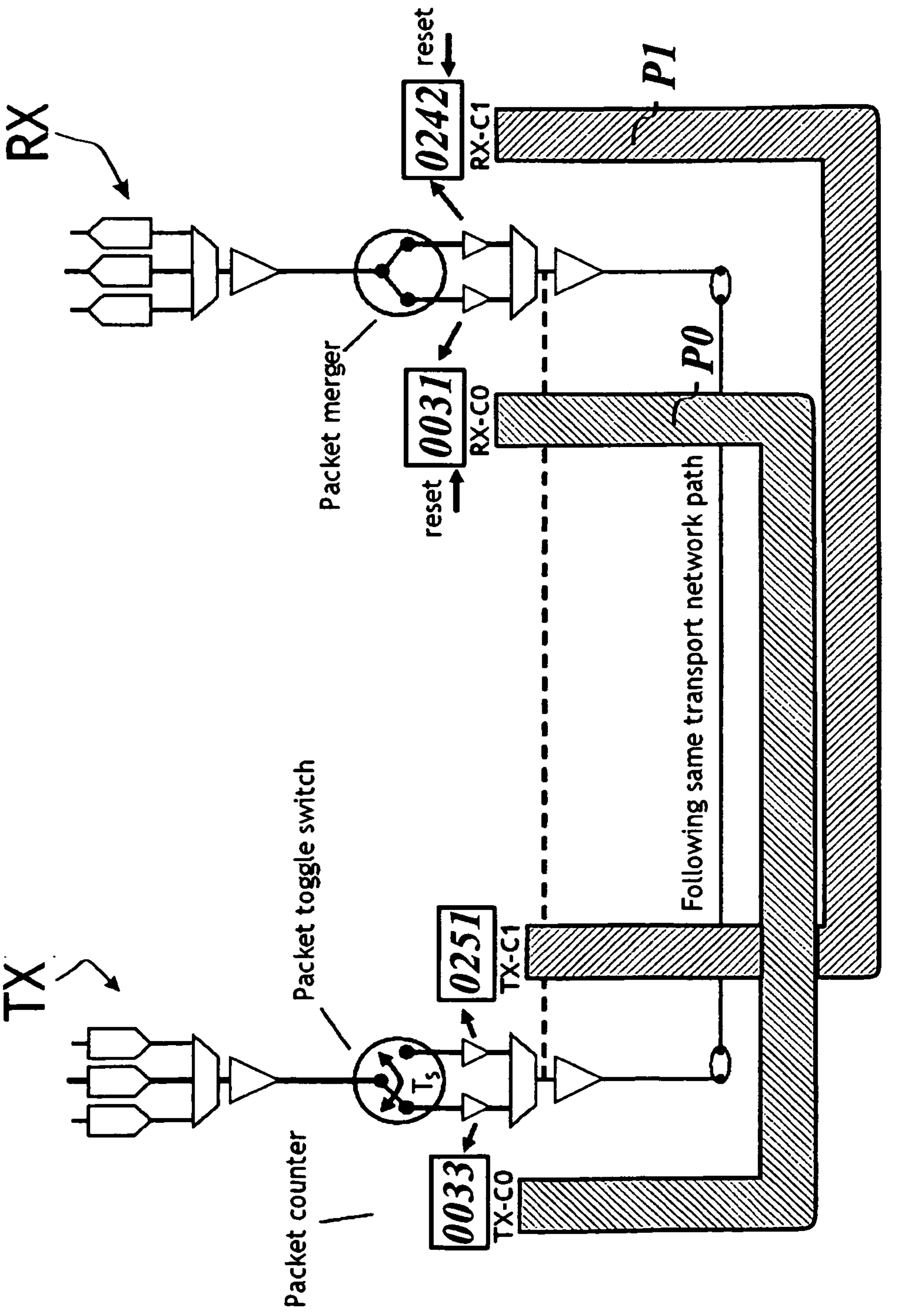
TX
RX
Packet counter
Packet toggle switch
Packet merger
0033
TX-C0
0251
TX-C1
0031
RX-C0
0242
RX-C1
reset
reset
P0
P1
Following same transport network path

*Fig. 2*

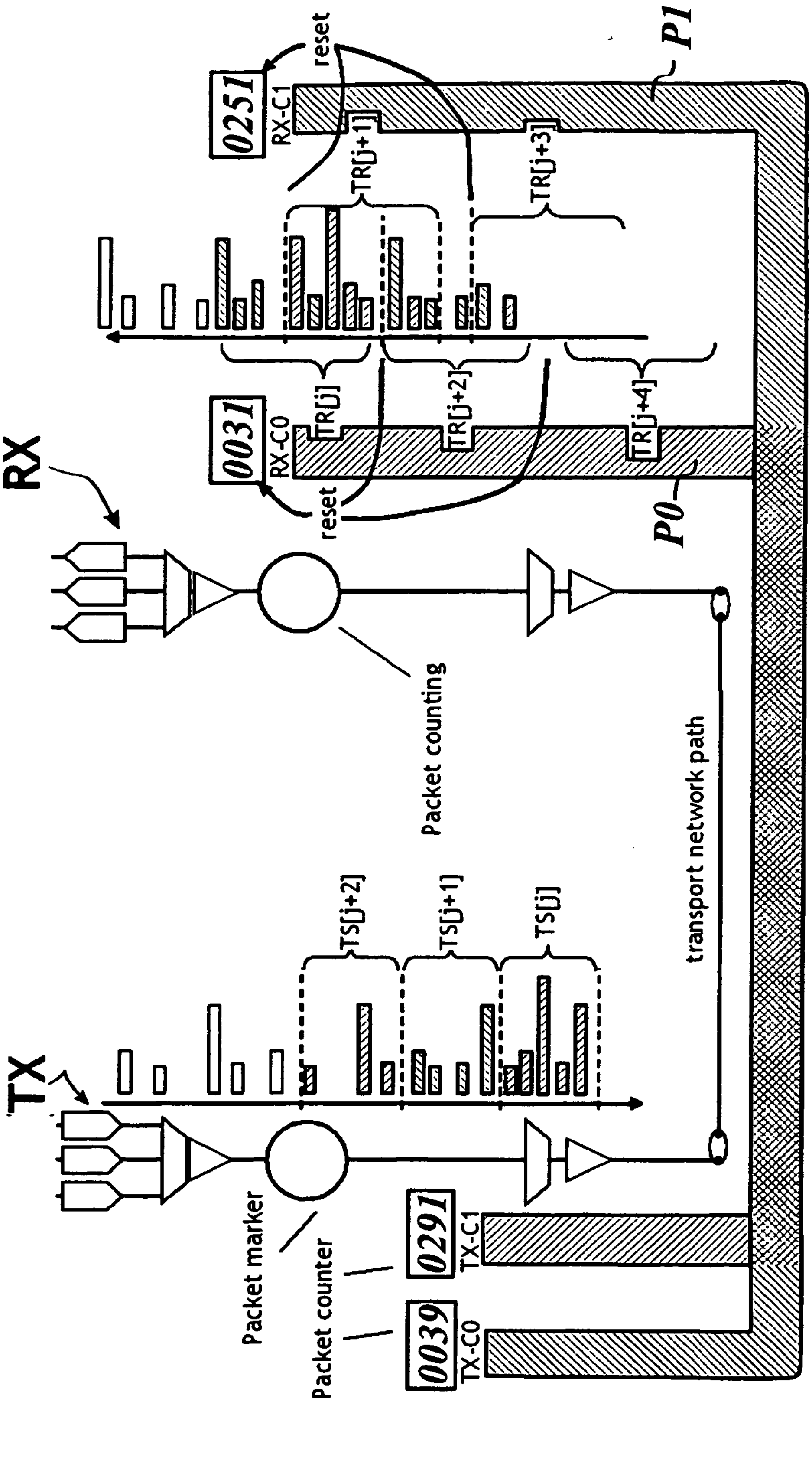
TX
RX
Packet marker
Packet counter
Packet counting
transport network path
0039
TX-C0
0291
TX-C1
0031
RX-C0
0251
RX-C1
reset
reset
P0
P1
TS[j]
TS[j+1]
TS[j+2]
TR[j]
TR[j+1]
TR[j+2]
TR[j+3]
TR[j+4]

Fig. 3

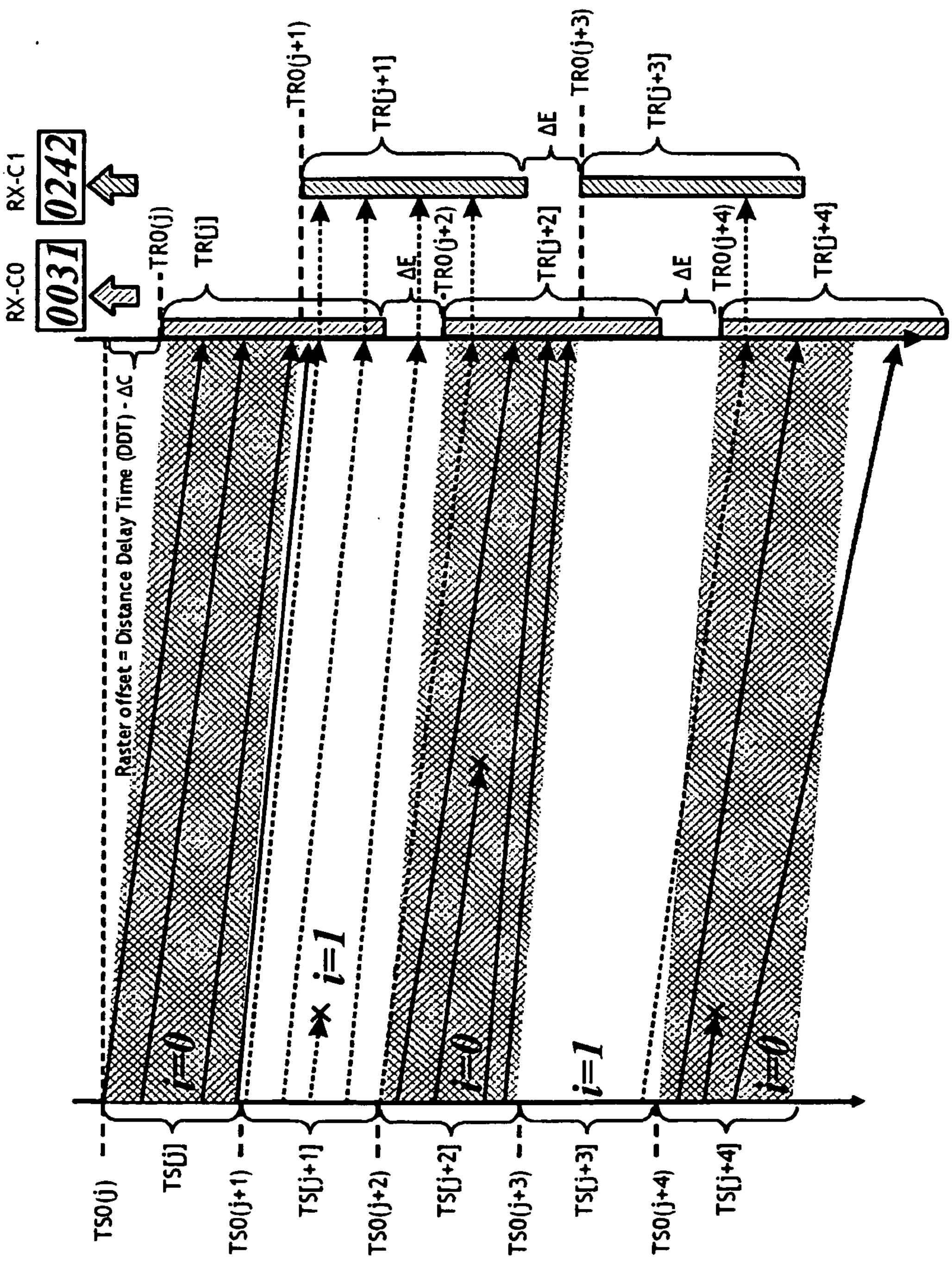
RX-C0
0031
RX-C1
0242
TRO(j)
TR[j]
TRO(j+1)
TR[j+1]
ΔE
TRO(j+2)
TR[j+2]
TRO(j+3)
TR[j+3]
TRO(j+4)
TR[j+4]
Raster offset = Distance Delay Time (DDT) - ΔC
i=0
i=1
TSO(j)
TS[j]
TSO(j+1)
TS[j+1]
TSO(j+2)
TS[j+2]
TSO(j+3)
TS[j+3]
TSO(j+4)
TS[j+4]

*Fig. 4*

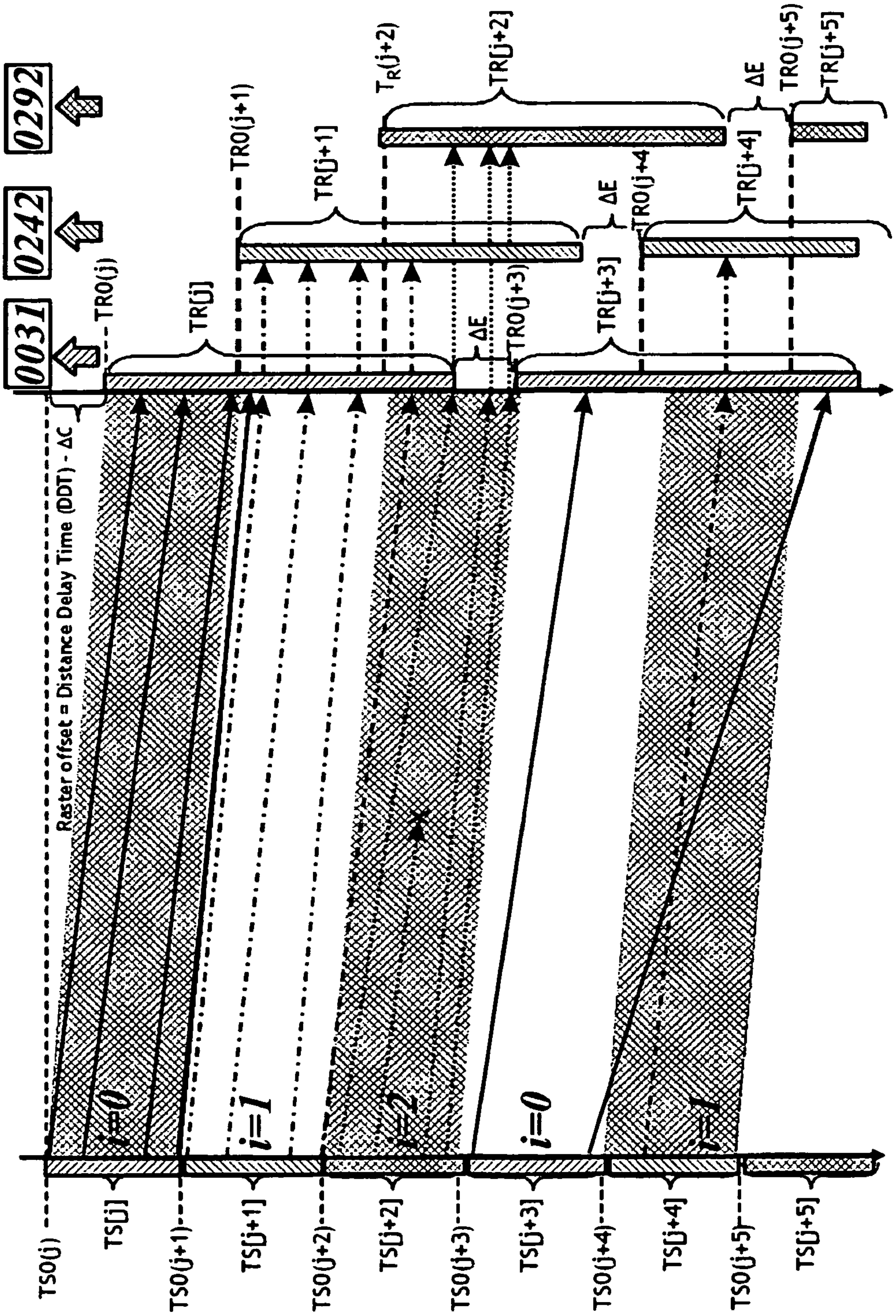
RX-C0
0031
RX-C1
0242
RX-C2
0292
TRO(j)
TR[j]
TRO(j+1)
TR[j+1]
$T_R$(j+2)
TR[j+2]
ΔE
TRO(j+3)
TR[j+3]
TRO(j+4
TR[j+4]
TRO(j+5)
TR[j+5]
Raster offset = Distance Delay Time (DDT) - ΔC
i=0
i=1
i=2
i=0
i=1
TS0(j)
TS[j]
TS0(j+1)
TS[j+1]
TS0(j+2)
TS[j+2]
TS0(j+3)
TS[j+3]
TS0(j+4)
TS[j+4]
TS0(j+5)
TS[j+5]

*Fig. 5*

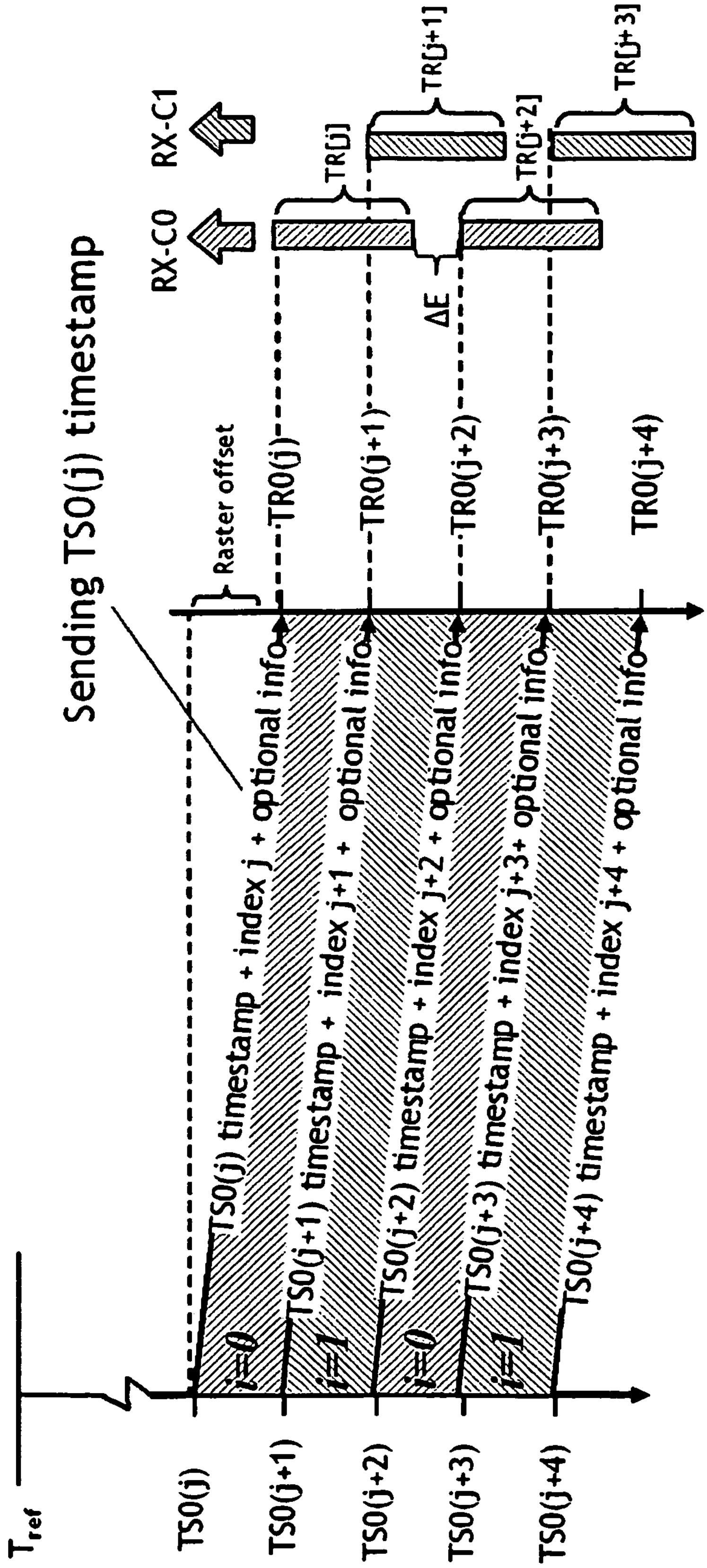

Sending TS0(j) timestamp
$T_{ref}$
TS0(j)
TS0(j+1)
TS0(j+2)
TS0(j+3)
TS0(j+4)
i=0
i=1
i=0
i=1
TS0(j) timestamp + index j + optional info
TS0(j+1) timestamp + index j+1 + optional info
TS0(j+2) timestamp + index j+2 + optional info
TS0(j+3) timestamp + index j+3+ optional info
TS0(j+4) timestamp + index j+4 + optional info
Raster offset
TR0(j)
TR0(j+1)
TR0(j+2)
TR0(j+3)
TR0(j+4)
RX-C0
RX-C1
TR[j]
TR[j+1]
TR[j+2]
TR[j+3]
ΔE


*Fig. 6a*

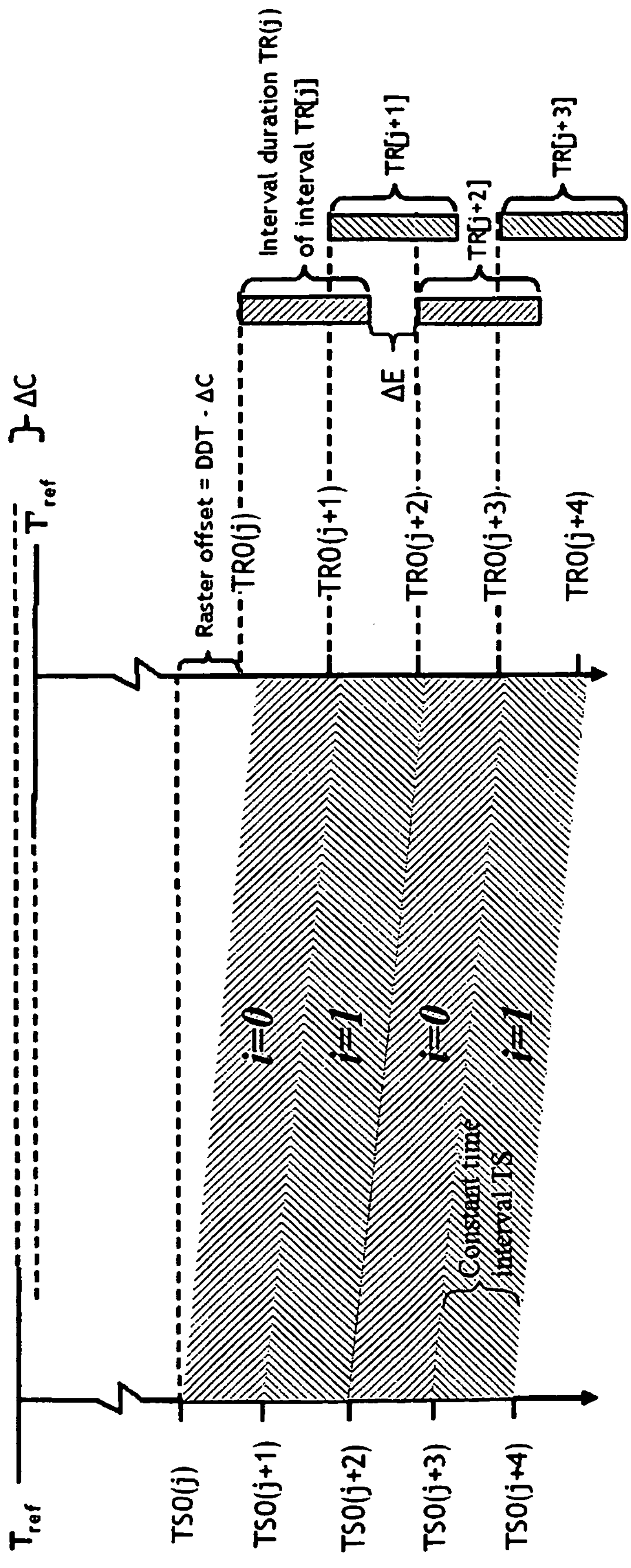

$T_{ref}$
$T_{ref}$
ΔC
Raster offset = DDT - ΔC
TRO(j)
TRO(j+1)
TRO(j+2)
TRO(j+3)
TRO(j+4)
Interval duration TR(j)
of interval TR[j]
TR[j+1]
TR[j+2]
TR[j+3]
ΔE
i=0
i=1
i=0
i=1
Constant time
interval TS
TSO(j)
TSO(j+1)
TSO(j+2)
TSO(j+3)
TSO(j+4)


*Fig. 6b*

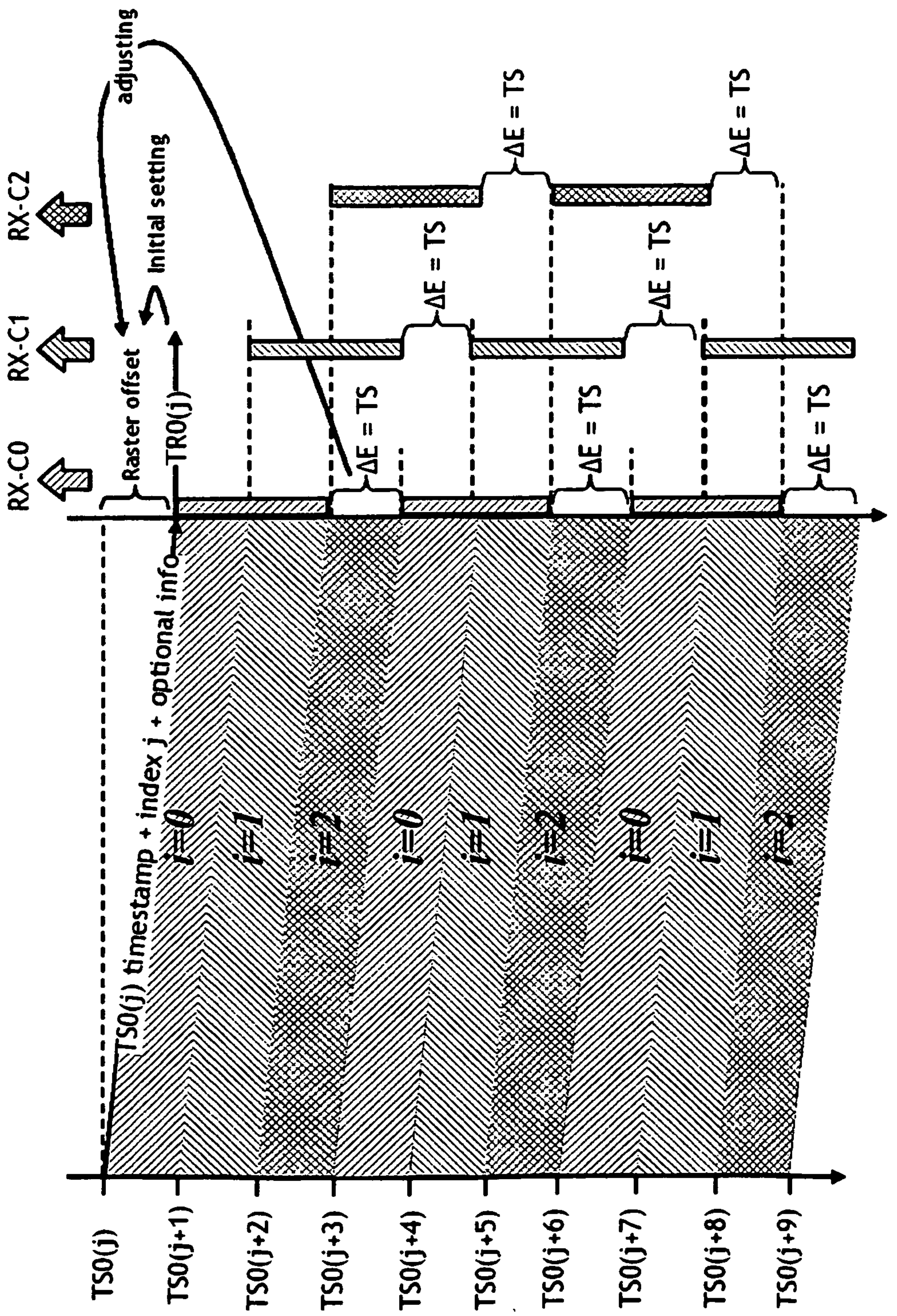
RX-C0
RX-C1
RX-C2
adjusting
Initial setting
Raster offset
TR0(j)
TS0(j) timestamp + index j + optional info
ΔE = TS
i=0
i=1
i=2
TS0(j)
TS0(j+1)
TS0(j+2)
TS0(j+3)
TS0(j+4)
TS0(j+5)
TS0(j+6)
TS0(j+7)
TS0(j+8)
TS0(j+9)

*Fig. 6c*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007024161 A1
- WO 2010072251 A1